# EUROPEAN PATENT APPLICATION

(11) **EP 4 362 527 A1**
(43) Date of publication of application: **01.05.2024**
(21) Application number: 21947078.8
(22) Date of filing: 23.06.2021
(51) Int. Cl.: H04W 16/28, H04W 92/12, H04B 10/2513, H04B 10/2575

(54) **WIRELESS COMMUNICATION METHOD**

(71) Applicant: Nippon Telegraph And Telephone Corporation, Chiyoda-ku Tokyo 100-8116 (JP)
(72) Inventor: ITO Kota, Musashino-shi, Tokyo 180-8585 (JP); SUGA Mizuki, Musashino-shi, Tokyo 180-8585 (JP); ARAI Takuto, Musashino-shi, Tokyo 180-8585 (JP); SHIRATO Yushi, Musashino-shi, Tokyo 180-8585 (JP); KITA Naoki, Musashino-shi, Tokyo 180-8585 (JP)
(74) Representative: Brevalex
(86) International application number: PCT/JP2021/023755
(87) International publication number: WO 2022/269792

(57) **Abstract**

A wireless communication method in a wireless communication system including an accommodation station device and a base station device that performs beam formation according to control of the accommodation station device, includes: transmitting an optical modulation signal generated by performing intensity modulation on an optical signal on the basis of a transmission signal to be transmitted to the base station device via an optical transmission line by the accommodation station device controlling any combination of a light wavelength, a frequency, or an optical polarized wave, or a plurality of frequencies or a plurality of light wavelengths, to perform beamforming control of the base station device; transmitting the optical modulation signal after dispersion compensation is performed in an electrical domain or an optical domain in the accommodation station device or performing dispersion compensation on the optical modulation signal on the optical transmission line; and inputting, by the base station device, an electrical signal based on the dispersion-compensated optical modulation signal to a beamforming circuit having a plurality of input ports to perform beam formation in a direction corresponding to an input port to which the electrical signal is input.

## Description

### [Technical Field]

The present invention relates to a wireless communication method.

### [Background Art]

Conventionally, attention has been paid to wireless communication using a millimeter wave band capable of high-speed transmission. However, when a millimeter wave band is used, there is a problem that it is difficult to perform long distance transmission because of a large propagation loss. Although a Radio over Fiber (ROF) system enables long distance transmission of radio frequency (RF) signals in a millimeter wave band, a coverage area of an antenna part becomes a problem. As a solution, beamforming using an array antenna may be conceived. As a beamforming technique using an ROF system or optical technology, techniques described in PTL 1 and NPL 1 have been proposed.

### [Citation List]

### [Patent Literature]

[PTL 1] Japanese Patent No. 4246724

### [Non Patent Literature]

[NPL 1] Dennis T. K, Tong, Ming C. Wu, "A Novel Multiwavelength Optically controlled Phased Array Antenna with a Programmable Dispersion Matrix," IEEE Photonics Technology Letters, 1996, June, VOL. 8, No. 6, p. 812-814.

### [Summary of Invention]

### [Technical Problem]

Fig. 23 is a diagram for describing an overview of a wireless communication system 100 in PTL 1. The wireless communication system 100 includes an accommodation station device 200 and a base station device 300. The accommodation station device 200 and the base station device 300 are connected via an optical fiber 400. The accommodation station device 200 modulates a plurality of optical signals having a specific wavelength interval output from a multi-wavelength variable light source 201 by an optical modulator 202 and transmits the modulated optical signals to the base station device 300. At this time, when the optical fiber 400 transmits optical modulation signals having a plurality of wavelengths, a delay difference different for each wavelength is generated due to the influence of chromatic dispersion.

The base station device 300 demultiplexes the optical modulation signals transmitted from the accommodation station device 200 for each wavelength by an optical demultiplexer 301 and converts them into electrical signals by O/Es 302-1 to 302-p (p is an integer equal to or greater than 1). Although the electrical signals are fed to antennas 303-1 to 303-p, a delay difference is also generated between the electrical signals due to a delay difference caused by chromatic dispersion that has occurred when the optical fiber 400 transmits the electrical signals, and directivity is formed when the electrical signals are radiated as radio waves. Therefore, a beam direction can be controlled by controlling the wavelengths of the optical signals output from the multi-wavelength variable light source 201.

However, it is necessary to make a wavelength interval of optical signals extremely large or small depending on the beam direction, the length of the optical fiber, and the frequency of RF signals. In the former case, a wavelength band to be used becomes wider, and thus wavelength utilization efficiency is considered to be lowered. On the other hand, in the latter case, it becomes difficult to control the multi-wavelength variable light source 201.

In the technique disclosed in PTL 1, since light wavelengths are dynamically controlled in order to dynamically control the beam direction, it is necessary to dynamically control the demultiplexing mechanism of the optical demultiplexer 301 included in the base station device 300. Therefore, it is necessary to control the base station device 300, and thus simplification of the base station device 300 is limited. Further, in the technique disclosed in PTL 1, distance information of the optical fiber is required for wavelength adjustment for adjusting a delay difference between optical signals. In general, the length of the optical fiber 400 between the accommodation station device 200 and the base station device 300 is not known or an accurate length is not known even if the length is known. Therefore, it is considered that the scope of application of the technique in PTL 1 is limited.

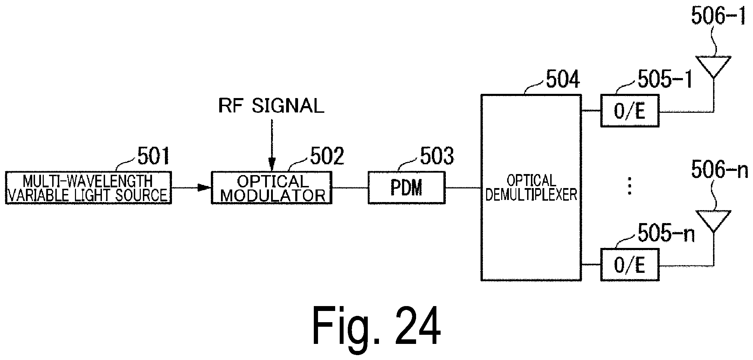

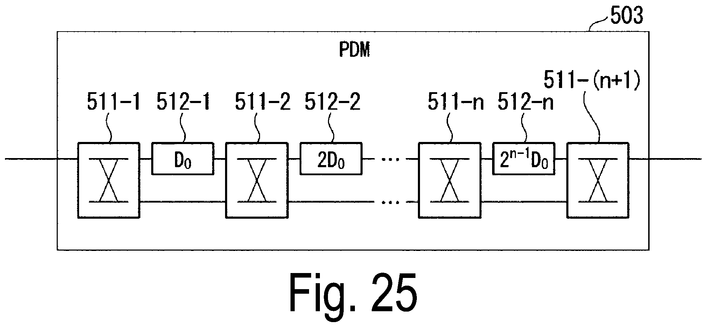

Fig. 24 is a diagram for describing the technique described in NPL 1. The apparatus shown in Fig. 24 includes a multi-wavelength variable light source 501, an optical modulator 502, a programmable dispersion matrix (PDM) 503, an optical demultiplexer 504, O/E 505-1 to 505-p, and antennas 506-1 to 506-p. Fig. 25 is a diagram showing an example of the configuration of a conventional PDM 503. As shown in Fig. 25, the PDM 503 includes a plurality of optical switches 511-1 to 511-q (q is an integer equal to or greater than 2) and a plurality of delay parts 512-1 to 512-q. In the technique described in NPL 1, different light wavelengths are fixedly associated with the respective antennas differently from the technique described in PTL 1. Then, a dispersion value is controlled by the PDM 503, a delay difference for each light wavelength is controlled, and a beam direction is controlled.

In the technique described in NPL 1, wavelength utilization efficiency is better than that in the case of PTL 1 because the light wavelength is fixed. Further, optical demultiplexing is also fixed, and thus it is not necessary to control the optical demultiplexer. However, it is considered that high accuracy is required to design and manufacture the PDM for controlling dispersion, and thus there is a risk of increase in size and cost of the apparatus.

Further, in the technique described in NPL 1, there is no mention of application to RoF. When long-distance optical fiber transmission is performed by applying ROF to the technique described in NPL 1, it is necessary to consider the influence of chromatic dispersion during optical fiber transmission in addition to dispersion control by the PDM. Furthermore, in the techniques disclosed in PTL 1 and NPL 1, only beamforming of transmission antennas is mentioned and beamforming of reception antennas is not mentioned. Further, in the conventional configuration, control of a beam width is not mentioned, it is difficult to control not only the phase of a signal fed to each antenna element but also the amplitude thereof, and it is difficult to remotely control the width of a beam transmitted from a base station device.

In view of the above circumstances, an object of the present invention is to provide a technique that makes it possible to control a beam and a beam width of a transmission/reception antenna without requiring control of a base station device and distance information of an optical fiber.

### [Solution to Problem]

One aspect of the present invention is a wireless communication method in a wireless communication system including an accommodation station device and a base station device that performs beam formation according to control of the accommodation station device, including: transmitting an optical modulation signal generated by performing intensity modulation on an optical signal on the basis of a transmission signal to be transmitted to the base station device via an optical transmission line by the accommodation station device controlling any combination of a light wavelength, a frequency, or an optical polarized wave, or a plurality of frequencies or a plurality of light wavelengths, to perform beamforming control of the base station device; transmitting the optical modulation signal after dispersion compensation is performed in an electrical domain or an optical domain in the accommodation station device or performing dispersion compensation on the optical modulation signal on the optical transmission line; and inputting, by the base station device, an electrical signal based on the dispersion-compensated optical modulation signal to a beamforming circuit having a plurality of input ports to perform beam formation in a direction corresponding to an input port to which the electrical signal is input.

### [Advantageous Effects of Invention]

According to the present invention, it is possible to control a beam and a beam width of a transmission/reception antenna without requiring control of a base station device and distance information of an optical fiber.

### [Brief Description of Drawings]

[Fig. 1] Fig. 1 is a diagram showing an example of a configuration of a wireless communication system in a first embodiment.
[Fig. 2] Fig. 2 is a sequence diagram showing a flow of processing of the wireless communication system in the first embodiment.

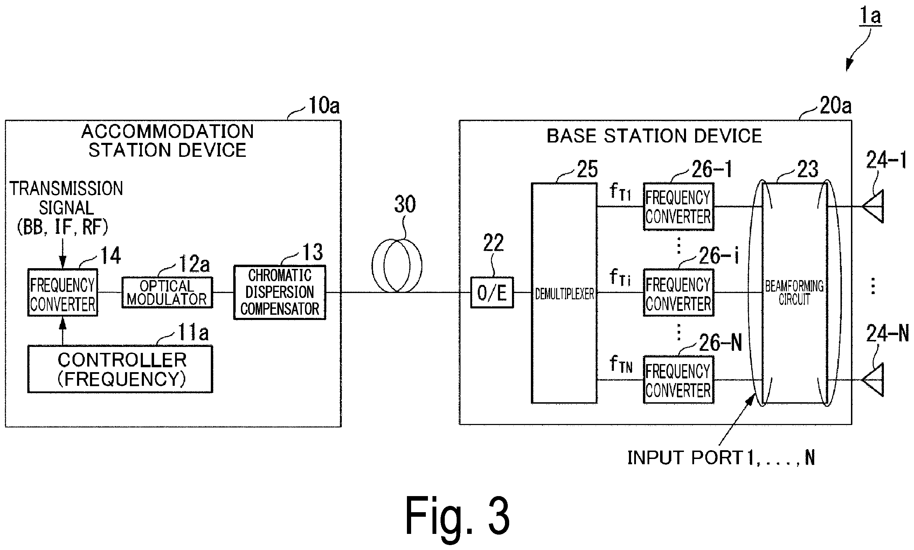

[Fig. 3] Fig. 3 is a diagram showing an example of a configuration of a wireless communication system in a second embodiment.
[Fig. 4] Fig. 4 is a sequence diagram showing a flow of processing of the wireless communication system in the second embodiment.
[Fig. 5] Fig. 5 is a diagram showing an example of a configuration of a wireless communication system in a third embodiment.
[Fig. 6] Fig. 6 is a sequence diagram showing a flow of processing of the wireless communication system in the third embodiment.
[Fig. 7] Fig. 7 is a diagram showing an example of a configuration of a wireless communication system in a fourth embodiment.
[Fig. 8] Fig. 8 is a sequence diagram showing a flow of processing of the wireless communication system in the fourth embodiment.
[Fig. 9] Fig. 9 is a diagram showing an example of a configuration of a wireless communication system in a fifth embodiment.
[Fig. 10] Fig. 10 is a sequence diagram showing a flow of processing of the wireless communication system in the fifth embodiment.
[Fig. 11] Fig. 11 is a diagram showing an example of a configuration of a wireless communication system according to a modified example of the fifth embodiment.
[Fig. 12] Fig. 12 is a diagram showing an example of a configuration of a wireless communication system in a sixth embodiment.
[Fig. 13] Fig. 13 is a sequence diagram showing a flow of processing of the wireless communication system in the sixth embodiment.
[Fig. 14] Fig. 14 is a diagram showing an example of a configuration of a wireless communication system in a seventh embodiment.
[Fig. 15] Fig. 15 is a sequence diagram showing a flow of processing of the wireless communication system in the seventh embodiment.
[Fig. 16] Fig. 16 is a diagram showing an example of a configuration of a wireless communication system in an eighth embodiment.
[Fig. 17] Fig. 17 is a sequence diagram showing a flow of processing of the wireless communication system in the eighth embodiment.
[Fig. 18] Fig. 18 is a diagram showing an example of a configuration of a wireless communication system in a ninth embodiment.
[Fig. 19] Fig. 19 is a sequence diagram showing a flow of processing of the wireless communication system in the ninth embodiment.
[Fig. 20] Fig. 20 is a diagram showing an example of a configuration of a wireless communication system in a tenth embodiment.
[Fig. 21] Fig. 21 is a sequence diagram showing a flow of processing of the wireless communication system in the tenth embodiment.
[Fig. 22] Fig. 22 is a diagram showing an example of a configuration of the wireless communication system according to a modified example of the tenth embodiment.
[Fig. 23] Fig. 23 is a diagram for describing an overview of a wireless communication system in PTL 1.

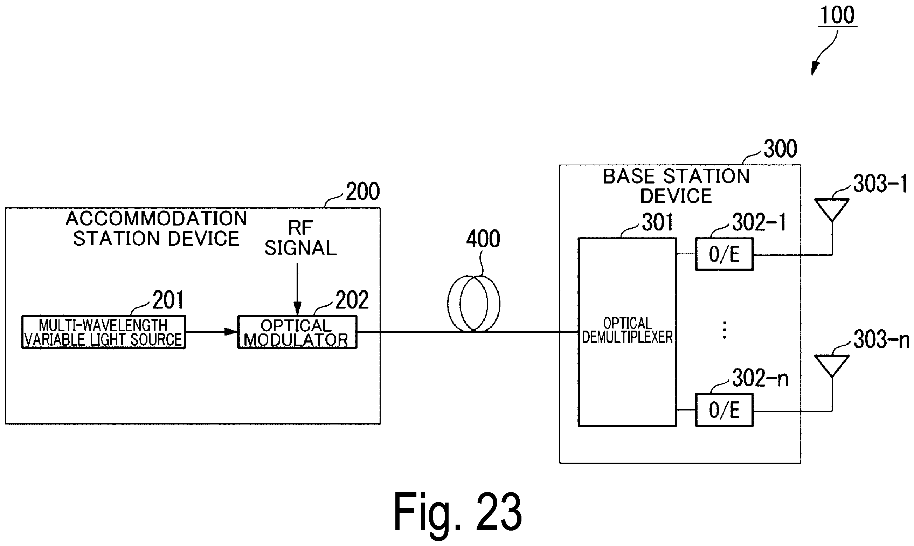

[Fig. 23] Fig. 24 is a diagram for describing a technique described in NPL 1.
[Fig. 25] Fig. 25 is a diagram showing an example of a configuration of a conventional PDM.

### [Description of Embodiments]

Hereinafter, an embodiment of the present invention will be described with reference to the drawings.

### (Overview)

In the present invention, in a system including an accommodation station device and a base station device connected by an optical transmission line, the base station device includes a Butler matrix as a beamforming circuit. The accommodation station device performs chromatic dispersion compensation or chromatic dispersion compensation and polarization mode dispersion compensation such that radio frequency (RF) signals are input in phase to input ports of the Butler matrix. Further, the accommodation station device remotely controls a beam and a beam width of the base station device by switching any combination of a light wavelength, a frequency, or an optical polarized wave, or a plurality of frequencies or a plurality of light wavelengths. Accordingly, it is possible to control a beam and a beam width of a transmission/reception antenna without requiring control of the base station device and distance information of an optical fiber. Hereinafter, as examples, embodiments will be described with respect to specific configurations.

### (First Embodiment)

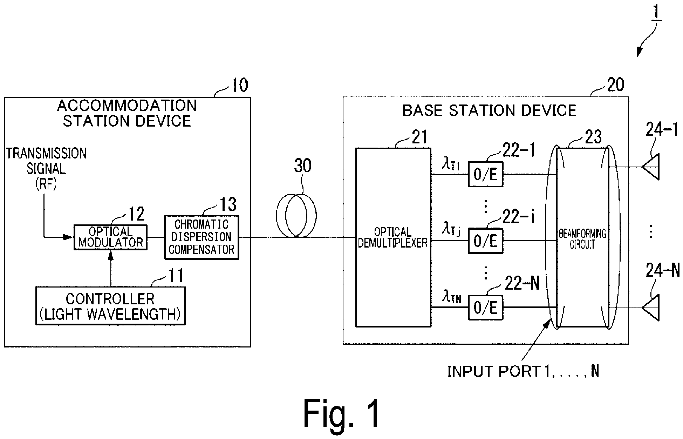

Fig. 1 is a diagram showing an example of a configuration of a wireless communication system 1 in a first embodiment. The wireless communication system 1 includes an accommodation station device 10 and a base station device 20. The accommodation station device 10 and the base station device 20 are connected via an optical transmission line 30. The optical transmission line 30 is, for example, an optical fiber. The optical transmission line 30 may be one or more single-core fibers or a multi-core fiber having one or more cores. In the following description, the direction from the accommodation station device 10 to the base station device 20 is defined as a downlink direction, and the direction from the base station device 20 to the accommodation station device 10 is defined as an uplink direction.

Although Fig. 1 shows a case in which there is one base station device 20, the wireless communication system 1 may include a plurality of base station devices 20. In this case, the accommodation station device 10 and the plurality of base station devices 20 may be connected through a passive optical network (PON). When the accommodation station device 10 and the plurality of base station devices 20 are connected through a PON, an optical splitter (branching part) is provided between the accommodation station device 10 and the plurality of base station devices 20. The optical splitter splits optical signals output from the accommodation station device 10 and outputs the split signals to the base station device 20. The passive optical network is, for example, a wavelength division multiplexing-passive optical network (WDM-PON) or a time division multiplexing-passive optical network (TDM-PON).

The accommodation station device 10 remotely controls a beam of the base station device 20 by switching the light wavelength of a transmission signal. The accommodation station device 10 remotely controls a beam of the base station device 20 using an analogue RoF technique. A transmission signal in the first embodiment is an RF signal.

The base station device 20 radiates a signal transmitted from the accommodation station device 10 by radio.

Next, specific configurations of the accommodation station device 10 and the base station device 20 will be described.

The accommodation station device 10 includes a controller 11, an optical modulator 12, and a chromatic dispersion compensator 13.

The controller 11 selects a light wavelength depending on a direction in which a beam is desired to be formed in the base station device 20. For example, the controller 11 selects any combination of applicable light wavelengths λ_{T1},..., λ_{Tn} as light wavelengths to be used in the optical modulator 12.

The optical modulator 12 performs intensity modulation on each of optical signals having the plurality of selected light wavelengths λ_{Tj} with a transmission signal in an RF band. Accordingly, the optical modulator 12 generates optical modulation signals having the plurality of light wavelengths λ_{Tj}. The plurality of optical modulation signals generated by the optical modulator 12 are subjected to wavelength division multiplexing (WDM) by an optical multiplexer which is not shown and thus a wavelength division multiplex signal is generated.

The chromatic dispersion compensator 13 performs chromatic dispersion compensation on the wavelength division multiplex signal. By performing chromatic dispersion compensation in the chromatic dispersion compensator 13, RF signals can be input in phase to input ports of the Butler matrix. Although a configuration in which chromatic dispersion compensation is performed in an optical domain is illustrated here, chromatic dispersion compensation may be performed in an electrical domain, and the same applies in the following description.

The base station device 20 includes an optical demultiplexer 21, a plurality of O/Es 22, a beamforming circuit 23, and a plurality of antennas 24-1 to 24-N.

The optical demultiplexer 21 demultiplexes optical modulation signals received via the optical transmission line 30 depending on wavelengths. For example, the optical demultiplexer 21 is an arrayed waveguide grating (AWG). The optical modulation signals demultiplexed by the optical demultiplexer 21 are input to each O/E 22.

Each O/E 22 is a photoelectric converter that converts an optical modulation signal output from the optical demultiplexer 21 into an electrical signal.

The beamforming circuit 23 has N (=2ⁿ (n∈Z⁺)) input ports and N output ports. N is an integer equal to or greater than 1. The beamforming circuit 23 is, for example, a Butler matrix (refer to Reference 1, for example).

(Reference 1: Wei Hong, Zhi Hao Jiang, Chao Yu, Jianyi Zhou, Peng Chen, Zhiqiang Yu, Hui Zhang, Binqi Yang, Xingdong Pang, Mai Jiang, Yujian Cheng, Mustafa K. Taher Al-Nuaimi, Yan Zhang, Jixin Chen, and Shiwen he, "Multibeam antenna technologies for 5G wireless communications," IEEE Transactions on Antennas and Propagation, 65(12), 6231-6249 (2017))

When an RF signal is input to a certain input port of the Butler matrix that is the beamforming circuit 23, RF signals having the same amplitude and linearly inclined phases are output from all output ports. Inclination of a phase differs depending on input ports. By providing the antennas 24-1 to 24-N at the output ports, beam formation can be achieved. Beam switching can be performed by switching ports to which RF signals are input, and beams which are formed are orthogonal to each other.

By inputting the same RF signal in phase to the plurality of input ports of the Butler matrix which is the beamforming circuit 23, adjacent orthogonal beams can be synthesized to form a sector beam. That is, a sector beam can also be switched by switching a combination of input ports.

N O/Es 22 are connected to the input ports of the beamforming circuit 23. N antennas 24 are connected to the output ports of the beamforming circuit 23. Electrical signals output from the N O/Es 22 are input in phase to the N input ports of the beamforming circuit 23.

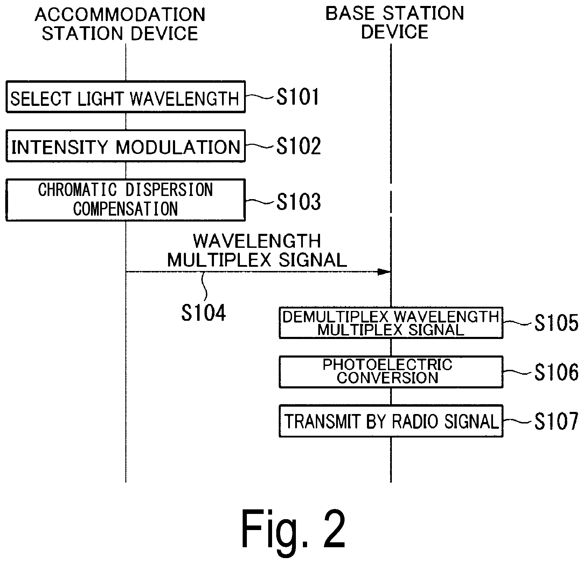

Fig. 2 is the sequence diagram showing a flow of processing of the wireless communication system 1 in the first embodiment.

The controller 11 selects a plurality of light wavelengths depending on a direction in which a beam is desired to be formed in the base station device 20 (step S101). For example, the controller 11 selects a plurality of light wavelengths λ_{Tj} from among light wavelengths λ_{T1}, ..., λ_{Tn}. The controller 11 controls the optical modulator 12 such that the optical modulator 12 performs optical intensity modulation on optical signals having the plurality of selected light wavelengths λ_{Tj}.

The optical modulator 12 performs intensity modulation on the optical signal having each of the plurality of light wavelengths λ_{Tj} designated by the controller 11 with a transmission signal (step S102). Accordingly, the optical modulator 12 generates a plurality of optical modulation signals having the selected light wavelengths λ_{Tj}. The plurality of optical modulation signals generated by the optical modulator 12 are subjected to wavelength division multiplexing by an optical multiplexer which is not shown and thus a wavelength division multiplex signal is generated.

The chromatic dispersion compensator 13 performs chromatic dispersion compensation on the wavelength division multiplex signal (step S103). The chromatic dispersion compensator 13 transmits the chromatic dispersion -compensated wavelength division multiplex signal to the optical transmission line 30 (step S104).

The wavelength division multiplex signal transmitted to the optical transmission line 30 is input to the base station device 20. The optical demultiplexer 21 of the base station device 20 demultiplexes the input wavelength division multiplex signal depending on wavelengths (step S105). As many O/Es 22 as the number of wavelengths are connected to output ports of the optical demultiplexer 21. Therefore, the optical modulation signals demultiplexed for respective wavelengths by the optical demultiplexer 21 are output to the O/Es 22 connected to the output ports corresponding to the wavelengths.

Each O/E 22 converts the input optical modulation signal into an electrical signal (step S106). According to this processing, the optical modulation signal is converted into an electrical signal. Each O/Es 22 outputs the converted electrical signal to the beamforming circuit 23. The beamforming circuit 23 forms a beam in a direction corresponding to an input port to which the electrical signal is input. Since chromatic dispersion compensation has been performed, an in-phase RF signal is input to the input port of the beamforming circuit 23. Accordingly, a radio signal is emitted from an antenna 24 connected to an output port corresponding to the input port to which the electrical signal is input. The antenna 24 connected to the output port corresponding to the input port to which the electrical signal is input radiates a radio signal corresponding to the input electrical signal (step S107).

According to the wireless communication system 1 configured as described above, it is possible to remotely switch a direction of a transmission beam by switching the light wavelength of a transmission signal in the accommodation station device 10. Further, chromatic dispersion compensation is performed in the accommodation station device 10, and a signal is transmitted to the base station device 20. Accordingly, it is possible to curb the influence of chromatic dispersion occurring in the optical transmission line 30. Since the influence of chromatic dispersion can be curbed, signals transmitted from the accommodation station device 10 at the same timing can be input in phase to the beamforming circuit 23 included in the base station device 20. As a result, the width of a beam transmitted from the base station device 20 can be controlled. Therefore, it is possible to control a beam and a beam width of a transmission/reception antenna without requiring control of the base station device and distance information of an optical fiber.

In the wireless communication system 1, a transmission beam can be switched by switching a combination of light wavelengths of transmission signals of the accommodation station device 10. Further, in the wireless communication system 1, multi-beam formation can also be performed by performing wavelength division multiplexing using a combination of a plurality of light wavelengths simultaneously.

### (Second Embodiment)

The second embodiment differs from the first embodiment in that an accommodation station device controls the frequency of a transmission signal to remotely control beam formation of a base station device. Description of the second embodiment will be focused on differences from the first embodiment.

An accommodation station device 10a remotely controls a beam of a base station device 20a by switching the frequency of a transmission signal. The transmission signal in the second embodiment may be a base band signal (BB signal), an intermediate frequency signal (IF signal), or an RF signal.

The accommodation station device 10a includes a controller 11a, an optical modulator 12a, a chromatic dispersion compensator 13, and a frequency converter 14.

The controller 11a selects frequencies depending on a direction in which a beam is desired to be formed in the base station device 20a. For example, the controller 11a selects any combination of N frequencies fri, ..., f_{TN}.

The frequency converter 14 converts an input transmission signal into each of a plurality of frequencies f_{Ti} designated by the controller 11a. Note that i is an integer equal to or greater than 1 and equal to or less than N.

The optical modulator 12a performs intensity modulation on each optical signal having a certain wavelength using the transmission signal having each frequency f_{Ti}. Accordingly, the optical modulator 12a generates a plurality of optical modulation signals. The optical modulator 12a performs subcarrier multiplexing on the plurality of optical modulation signals.

The base station device 20a includes an O/E 22, a demultiplexer 25, a plurality of frequency converters 26-1 to 26-N, a beamforming circuit 23, and a plurality of antennas 24-1 to 24-N.

The demultiplexer 25 demultiplexes an electrical signal (for example, a subcarrier-multiplexed electrical signal) extracted by the O/E 22 depending on frequencies.

The frequency converters 26-1 to 26-N convert the frequencies of input electrical signals into frequencies in an RF band.

The frequency converters 26-1 to 26-N are connected to the input ports of the beamforming circuit 23. The antennas 24-1 to 24-N are connected to the output ports of the beamforming circuit 23. The electrical signal output from the O/E 22 is input in phase to the N input ports of the beamforming circuit 23.

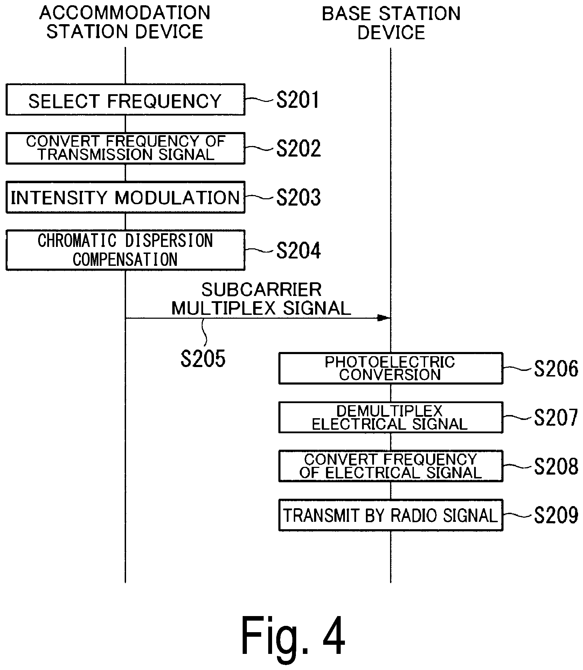

Fig. 4 is a sequence diagram showing a flow of processing of the wireless communication system 1a in the second embodiment.

The controller 11a selects a plurality of frequencies depending on a direction in which a beam is desired to be formed in the base station device 20a (step S201). For example, the controller 11a selects a plurality of frequencies f_{Ti} from among N frequencies f_{T1}, ..., f_{TN}.

The controller 11a controls the frequency converter 14 such that the frequency converter 14 converts the frequency of a transmission signal into each of the plurality of selected frequencies f_{Ti}.

The frequency converter 14 converts the input transmission signal into each frequency f_{Ti} designated by the controller 11a (step S202). The frequency converter 14 outputs the transmission signal having each frequency f_{Ti} to the optical modulator 12a. The optical modulator 12a performs intensity modulation on an optical signal having a certain wavelength using each transmission signal having each frequency f_{Ti} output from the frequency converter 14 (step S203). Accordingly, the optical modulator 12a generates a plurality of optical modulation signals. The optical modulator 12a performs subcarrier multiplexing on the plurality of generated optical modulation signals to generate a subcarrier multiplex signal. The optical modulator 12a outputs the generated subcarrier multiplex signal to the chromatic dispersion compensator 13.

The chromatic dispersion compensator 13 performs chromatic dispersion compensation on the subcarrier multiplex signal (step S204). The chromatic dispersion compensator 13 transmits the subcarrier multiplex signal after chromatic dispersion compensation processing to the optical transmission line 30 (step S205).

The subcarrier multiplex signal sent to the optical transmission line 30 is input to the base station device 20a. The O/E 22 of the base station device 20a converts the input subcarrier multiplex signal into an electrical signal (step S206). The O/E 22 outputs the electrical signal to the demultiplexer 25. The electrical signal output to the demultiplexer 25 is demultiplexed depending on frequencies (step S207).

The plurality of frequency converters 26-1 to 26-N are connected to the output ports of the demultiplexer 25. For example, the frequency converter 26-1 is connected to an output port of the demultiplexer 25 corresponding to the frequency fri, the frequency converter 26-i is connected to an output port of the demultiplexer 25 corresponding to the frequency f_{Ti}, and the frequency converter 26-N is connected to an output port of the demultiplexer 25 corresponding to the frequency f_{TN}. Therefore, electrical signals demultiplexed for respective frequencies by the demultiplexer 25 are output to the frequency converters 26 connected to the output ports depending on the frequencies. In Fig. 4, it is assumed that the electrical signal having the frequency f_{Ti} is demultiplexed by the demultiplexer 25 and input to the frequency converter 26-i.

The frequency converter 26-i converts the frequency of the input electrical signal into a frequency in an RF band (step S208). The frequency converter 26-i outputs the electrical signal in the RF band to the beamforming circuit 23. The beamforming circuit 23 forms a beam in a direction corresponding to the input port to which the electrical signal is input. Since chromatic dispersion compensation has been performed, an in-phase RF signal is input to the input port of beamforming circuit 23. Accordingly, a radio signal is emitted from an antenna 24 connected to an output port corresponding to the input port to which the electrical signal is input. The antenna 24 connected to the output port corresponding to the input port to which the electrical signal is input radiates a radio signal corresponding to the input electrical signal (step S209).

According to the wireless communication system 1a configured as described above, it is possible to remotely switch a direction of a transmission beam by switching the frequency of a transmission signal in the accommodation station device 10a. Furthermore, chromatic dispersion compensation is performed in the accommodation station device 10a, and a signal is transmitted to the base station device 20a. Accordingly, it is possible to curb the influence of chromatic dispersion occurring in the optical transmission line 30. Since the influence of chromatic dispersion can be curbed, signals transmitted from the accommodation station device 10a at the same timing can be input in phase to the beamforming circuit 23 included in the base station device 20a. As a result, the width of a beam transmitted from the base station device 20a can be controlled. Therefore, it is possible to control a beam and a beam width of a transmission/reception antenna without requiring control of the base station device and distance information of an optical fiber.

Furthermore, in the wireless communication system 1a, it is possible to simplify the base station device 20a by allocating a frequency to the beamforming circuit 23 without requiring control of the base station device 20a and optical fiber distance information.

In the wireless communication system 1, transmission beam switching can be performed by switching a combination of frequencies of transmission signals of the accommodation station device 10a. Further, in the wireless communication system 1a, multi-beam formation can also be performed by performing subcarrier multiplexing using a combination of a plurality of frequencies simultaneously.

### (Modified Example of Second Embodiment)

The accommodation station device 10a may be configured to form multiple beams in the base station device 20a by performing subcarrier multiplexing (SCM) using a plurality of frequencies simultaneously.

### (Third Embodiment)

The third embodiment differs from the first embodiment in that an accommodation station device controls a light wavelength and a frequency to remotely control beam formation of a base station device. Description of the third embodiment will be focused on differences from the first embodiment.

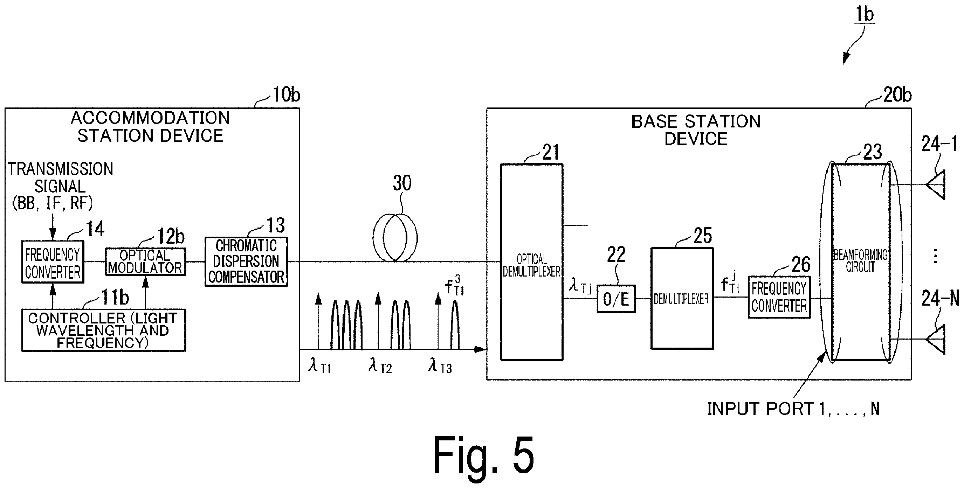

Fig. 5 is a diagram showing an example of a configuration of a wireless communication system 1b in the third embodiment. The wireless communication system 1b includes an accommodation station device 10b and a base station device 20b. The accommodation station device 10b and the base station device 20b are connected via the optical transmission line 30.

The accommodation station device 10b remotely controls a beam of the base station device 20b by switching the frequency and light wavelength of a transmission signal. The transmission signal in the third embodiment may be a BB signal, an IF signal, or an RF signal.

The accommodation station device 10b includes a controller 11b, an optical modulator 12b, a chromatic dispersion compensator 13, and a frequency converter 14.

The controller 11b selects a frequency and a light wavelength depending on a direction in which a beam is desired to be formed the base station device 20b. For example, the controller 11b selects any one or a plurality of applicable light wavelengths λ_{T1}, ..., λ_{Tn} as a light wavelength to be used in the optical modulator 12b. For example, the controller 11b selects any one or a plurality of frequencies f^{j}_{T1}, ..., fⁱ_{Tmj} applicable to a light wavelength λ_{Tj}. m is an integer equal to or greater than 1. j is an integer equal to or greater than 1.

The frequency converter 14 converts an input transmission signal into a frequency f^{j}_{Ti} designated by the controller 11b.

The optical modulator 12b performs intensity modulation on an optical signal having the wavelength λ_{Tj} designated by the controller 11b using the signal having the frequency f^{j}_{Ti}. Accordingly, the optical modulator 12b generates an optical modulation signal having the wavelength λ_{Tj}.

The base station device 20b includes an optical demultiplexer 21, a plurality of O/Es 22, a plurality of demultiplexers 25, a plurality of frequency converters 26, a beamforming circuit 23, and a plurality of antennas 24-1 to 24-N. Although the description is omitted in Fig. 5 for simplicity of explanation, as many O/Es 22 and demultiplexers 25 as the number n of light wavelengths λ_{T} need to be provided, and as many frequency converters 26 as the number mⱼ of frequencies used by the light wavelengths λ_{Tj} need to be provided.

The frequency converters 26 are connected to the input ports of the beamforming circuit 23. N antennas 24 are connected to the output ports of the beamforming circuit 23. Electrical signals output from the frequency converters 26 are input in phase to N input ports of the beamforming circuit 23.

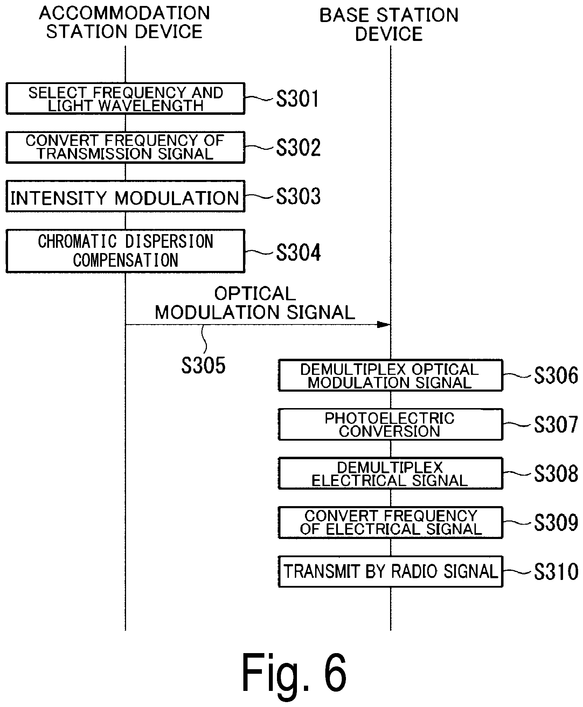

Fig. 6 is a sequence diagram showing a flow of processing of the wireless communication system 1b in the third embodiment.

The controller 11b selects a frequency and a light wavelength depending on a direction in which a beam is desired to be formed in the base station device 20b (step S301). For example, the controller 11b selects one frequency f^{j}_{Ti} from among frequencies f^{j}_{T1}, ..., f^{j}_{Tmj}. Further, the controller 11b selects one light wavelength λ_{Tj} from among light wavelengths λ_{T1}, ..., λ_{Tn}. The controller 11b controls the frequency converter 14 such that the frequency converter 14 performs frequency conversion to the selected frequency f^{j}_{Ti}. Further, the controller 11b controls the optical modulator 12b such that the optical modulator 12b perform optical intensity modulation with the selected light wavelength λ_{Tj}.

The frequency converter 14 converts an input transmission signal into the frequency f^{j}_{Ti} designated by the controller 11b (step S302). The frequency converter 14b outputs the transmission signal having the frequency f^{j}_{Ti} to the optical modulator 12b. The optical modulator 12b performs intensity modulation on the light wavelength λ_{Tj} designated by the controller 11b using the transmission signal having the frequency f^{j}_{Ti} output from the frequency converter 14 (step S303). Accordingly, the optical modulator 12b generates an optical modulation signal having the light wavelength λ_{Tj}. The optical modulator 12b outputs the generated optical modulation signal to the chromatic dispersion compensator 13.

The chromatic dispersion compensator 13 performs chromatic dispersion compensation on the optical modulation signal (step S304). The chromatic dispersion compensator 13 transmits the optical modulation signal after chromatic dispersion compensation processing to the optical transmission line 30 (step S305).

The optical modulation signal sent to the optical transmission line 30 is input to the base station device 20b. The optical demultiplexer 21 of the base station device 20b demultiplexes the input optical modulation signal having the light wavelength λ_{Tj} (step S306). The O/Es 22 are connected to the output ports of the optical demultiplexer 21 in accordance with the number of light wavelengths. Therefore, optical modulation signals demultiplexed for respective wavelengths by the optical demultiplexer 21 are output to the O/Es 22 connected to the output ports depending on the wavelengths. In Fig. 6, it is assumed that the optical modulation signal having the light wavelength λ_{Tj} is demultiplexed by the optical demultiplexer 21 and input to the O/Es 22.

Each O/E 22 converts an input optical modulation signal into an electrical signal (step S307). By this processing, the optical modulation signal is converted into an electrical signal having a frequency f^{j}_{Ti}. Each O/E 22 outputs the electrical signal having the frequency f^{j}_{Ti} to the demultiplexer 25. The electrical signal having the frequency f^{j}_{Ti} output to the demultiplexer 25 is demultiplexed depending on the frequency (step S308). The electrical signal demultiplexed by the demultiplexer 25 is input to the frequency converter 26.

Each frequency converter 26 converts the frequency of the input electrical signal into a frequency in an RF band (step S309). Each frequency converter 26 outputs the electrical signal in the RF band to the beamforming circuit 23. The beam forming circuit 23 forms a beam in a direction corresponding to the input port to which the electrical signal is input. Since chromatic dispersion compensation has been performed, an in-phase RF signal is input to the input port of beamforming circuit 23. Accordingly, a radio signal is emitted from an antenna 24 connected to an output port corresponding to the input port to which the electrical signal is input. The antenna 24 connected to the output port corresponding to the input port to which the electrical signal is input radiates a radio signal corresponding to the input electrical signal (step S310).

According to the wireless communication system 1b configured as described above, it is possible to remotely switch the direction of a transmission beam by switching a combination of the light wavelength and the frequency of a transmission signal in the accommodation station device 10b. Furthermore, chromatic dispersion compensation is performed in the accommodation station device 10b, and a signal is transmitted to the base station device 20b. Accordingly, it is possible to curb the influence of chromatic dispersion occurring in the optical transmission line 30. Since the influence of chromatic dispersion can be curbed, signals transmitted from the accommodation station device 10b at the same timing can be input in phase to the beamforming circuit 23 included in the base station device 20b. As a result, the width of a beam transmitted from the base station device 20b can be controlled. Therefore, it is possible to control a beam and a beam width of a transmission/reception antenna without requiring control of the base station device and distance information of an optical fiber.

### (Modified Example of Third Embodiment)

The accommodation station device 10b may be configured to form multiple beams in the base station device 20b by simultaneously using a plurality of light wavelengths and a plurality of frequencies and performing subcarrier multiplexing and wavelength division multiplexing.

### (Fourth Embodiment)

The fourth embodiment differs from the first embodiment in that an accommodation station device controls optical polarized waves and the frequency of a transmission signal to remotely control beam formation of a base station device. Description of the fourth embodiment will be focused on differences from the first embodiment.

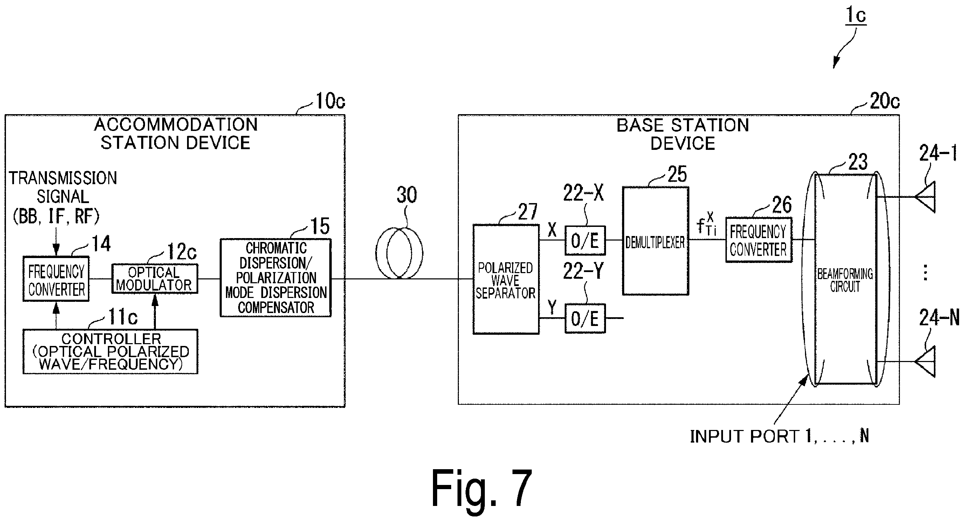

Fig. 7 is a diagram showing an example of a configuration of a wireless communication system 1c in the fourth embodiment. The wireless communication system 1c includes an accommodation station device 10c and a base station device 20c. The accommodation station device 10c and the base station device 20c are connected via the optical transmission line 30.

The accommodation station device 10c remotely controls a beam of the base station device 20c by switching optical polarized waves and the frequency of a transmission signal. The transmission signal in the fourth embodiment may be a BB signal, an IF signal, or an RF signal.

The accommodation station device 10c includes a controller 11c, an optical modulator 12c, a frequency converter 14, and a chromatic dispersion/polarization mode dispersion compensator 15.

The controller 11c selects a frequency and optical polarized waves depending on a direction in which a beam is desired to be formed in the base station device 20c. For example, the controller 11c selects any one or a plurality of applicable optical polarized waves X and Y as optical polarized waves used by the optical modulator 12c. Here, X and Y represent a horizontally polarized wave and a vertically polarized wave, respectively. For example, the controller 11c selects any one or a plurality of frequencies f^{k}_{T1}, ..., f^{k}_{Tmk} applicable to an optical polarized wave k (k is X or Y).

The frequency converter 14 converts an input transmission signal into a frequency f^{k}_{Ti} designated by the controller 11c.

The optical modulator 12c performs intensity modulation on an optical signal having a certain optical polarized wave k designated by the controller 11c using the signal having the frequency f^{k}_{Ti}. Accordingly, the optical modulator 12c generates an optical modulation signal having the optical polarized wave k.

The chromatic dispersion/polarization mode dispersion compensator 15 performs chromatic dispersion compensation and polarization mode dispersion compensation on the optical modulation signal having the optical polarized wave k. By performing chromatic dispersion compensation and polarization mode dispersion in the chromatic dispersion/polarization mode dispersion compensator 15, RF signals can be input in phase to the respective input ports of the Butler matrix. Although chromatic dispersion compensation and polarization mode dispersion are performed in an optical domain here, chromatic dispersion compensation and polarization mode dispersion may be performed in an electrical domain, and the same applies to the following description.

The base station device 20c includes a polarized wave separator 27, a plurality of O/Es 22-X and 21-Y, a plurality of demultiplexers 25, a plurality of frequency converters 26, a beamforming circuit 23, and a plurality of antennas 24-1 to 24-N. Although the description is omitted in Fig. 7 for simplification of explanation, as many O/Es 22 and demultiplexers 25 as the number (e.g., 2) of optical polarized waves need to be provided, and as many frequency converters 26 as the total number (m_{X}+m_{Y}) of the number m_{X} of frequencies to be used by the optical polarized wave X and the number m_{Y} of frequencies to be used by the optical polarized wave Y need to be provided.

The polarized wave separator 27 separates the component of the optical polarized wave k of the optical modulation signal received through the optical transmission line 30.

The plurality of frequency converters 26 are connected to the input ports of the beamforming circuit 23. N antennas 24 are connected to the output ports of the beamforming circuit 23. Electrical signals output from the plurality of frequency converters 26 are input in phase to the N input ports of the beamforming circuit 23.

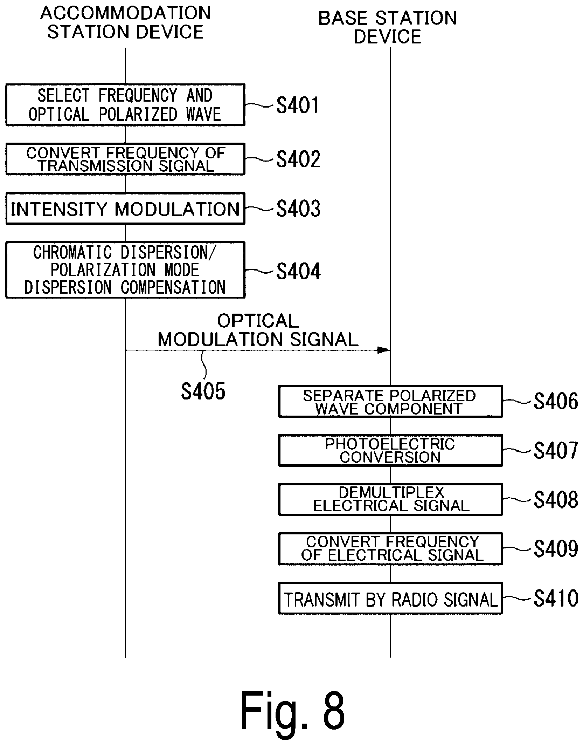

Fig. 8 is a sequence diagram showing a flow of processing of the wireless communication system 1c in the fourth embodiment.

The controller 11c selects a frequency and an optical polarized wave depending on a direction in which a beam is desired to be formed in the base station device 20c (step S401). For example, the controller 11c selects one frequency f^{X}_{Ti} from among frequencies f^{X}_{T1}, ..., f^{X}_{Tmj}. Further, the controller 11c selects one optical polarized wave X from among optical polarized waves k. The controller 11c controls the frequency converter 14 such that the frequency converter 14 performs frequency conversion to the selected frequency f^{X}_{Ti}. Further, the controller 11c controls the optical modulator 12c such that the optical modulator 12c performs optical intensity modulation on the optical signal of the selected optical polarized wave X.

The frequency converter 14 converts an input transmission signal into the frequency f^{X}_{Ti} designated by the controller 11c (step S402). The frequency converter 14c outputs the transmission signal having the frequency f^{X}_{Ti} to the optical modulator 12c. The optical modulator 12c performs intensity modulation on the optical signal of the optical polarized wave X designated by the controller 11c using the transmission signal having the frequency f^{X}_{Ti} output from the frequency converter 14 (step S403). Accordingly, the optical modulator 12c generates an optical modulation signal of the optical polarized wave X. The optical modulator 12c outputs the generated optical modulation signal to the chromatic dispersion/polarization mode dispersion compensator 15.

The chromatic dispersion/polarization mode dispersion compensator 15 performs chromatic dispersion and polarization mode dispersion compensation on the optical modulation signal (step S404). The chromatic dispersion/polarization mode dispersion compensator 15 transmits the optical modulation signal after dispersion compensation processing to the optical transmission line 30 (step S405).

The optical modulation signal sent to the optical transmission line 30 is input to the base station device 20c. The polarized wave separator 27 of the base station device 20c separates the component of the optical polarized wave k of the input optical modulation signal of the optical polarized wave X (step S406). The O/Es 22-X and 21-Y are connected to the output ports of the polarized wave separator 27 in accordance with the number of polarized waves. Therefore, the optical modulation signal separated by the polarized wave separator 27 is output to the O/Es 22-X and 21-Y connected to output ports corresponding to the optical polarized wave component. In Fig. 8, it is assumed that the optical modulation signal of the optical polarized wave X is separated by the polarized wave separator 27 and input to the O/E 22-X.

The O/E 22-X converts the input optical modulation signal into an electrical signal (step S407). By this processing, the optical modulation signal is converted into an electrical signal having the frequency f^{X}_{Ti}. The O/E 22-X outputs the electrical signal having the frequency f^{X}_{Ti} to the demultiplexer 25. The electrical signal having the frequency f^{X}_{Ti} output to the demultiplexer 25 is demultiplexed depending on the frequency (step S408). The electrical signal demultiplexed by the demultiplexer 25 is input to the frequency converter 26.

Each frequency converter 26 converts the frequency of the input electrical signal into a frequency in an RF band (step S409). Each frequency converter 26 outputs the electrical signal in the RF band to the beamforming circuit 23. The beamforming circuit 23 forms a beam in a direction corresponding to an input port to which the electrical signal is input. In-phase RF signals are input to the input ports of the beamforming circuit 23 since chromatic dispersion compensation and polarization mode dispersion have been performed. Accordingly, a radio signal is emitted from an antenna 24 connected to an output port corresponding to the input port to which the electrical signal is input. The antenna 24 connected to the output port corresponding to the input port to which the electrical signal is input radiates a radio signal corresponding to the input electrical signal (step S410).

According to the wireless communication system 1c configured as described above, the direction of a transmission beam can be switched remotely by switching a combination of the optical polarized wave and the frequency of the transmission signal in the accommodation station device 10c. Furthermore, chromatic dispersion compensation is performed in the accommodation station device 10c, and a signal is transmitted to the base station device 20c. Accordingly, it is possible to curb the influence of chromatic dispersion occurring in the optical transmission line 30. Since the influence of chromatic dispersion can be curbed, signals transmitted from the accommodation station device 10c at the same timing can be input in phase to the beamforming circuit 23 included in the base station device 20c. As a result, the width of a beam transmitted from the base station device 20c can be controlled. Therefore, it is possible to control a beam and a beam width of a transmission/reception antenna without requiring control of the base station device and distance information of an optical fiber.

### (Modified Example of Fourth Embodiment)

The accommodation station device 10c may be configured to perform multi-beam formation in the base station device 20c by simultaneously using a plurality of optical polarized waves and a plurality of frequencies and performing subcarrier multiplexing and polarization division multiplexing (PDM).

### (Fifth Embodiment)

The fifth embodiment differs from the first embodiment in that an accommodation station device controls the light wavelength and optical polarized waves of a transmission signal to remotely control beam formation of a base station device. Description of the fifth embodiment will be focused on differences from the first embodiment.

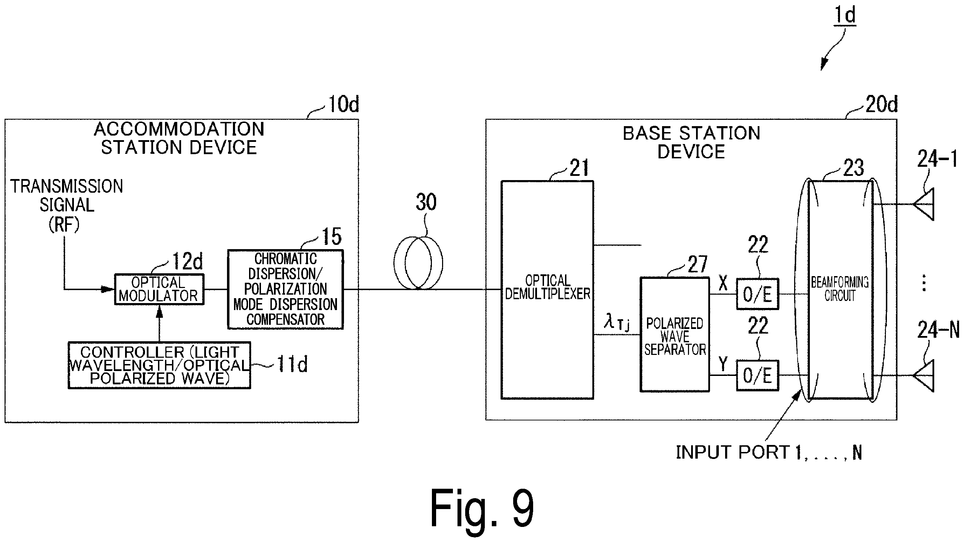

Fig. 9 is a diagram showing an example of a configuration of a wireless communication system 1d in the fifth embodiment. The wireless communication system 1d includes an accommodation station device 10d and a base station device 20d. The accommodation station device 10d and the base station device 20d are connected via the optical transmission line 30.

The accommodation station device 10d remotely controls a beam of the base station device 20d by switching the light wavelength and optical polarized waves of a transmission signal. The transmission signal in the fifth embodiment is an RF signal.

The accommodation station device 10d includes a controller 11d, an optical modulator 12d, and a chromatic dispersion/polarization mode dispersion compensator 15.

The controller 11d selects a light wavelength and an optical polarized wave depending on a direction in which a beam is desired to be formed in the base station device 20d. For example, the controller 11d selects one or a plurality of applicable optical polarized waves X and Y as optical polarized waves to be used by the optical modulator 12d. For example, the controller 11d selects any one or a plurality of applicable light wavelengths λ_{T1}, ..., λ_{Tn} as a light wavelength to be used in the optical modulator 12d.

The optical modulator 12d performs intensity modulation on a transmission signal in an RF band using an optical signal of an optical polarized wave k having a certain light wavelength λ_{Tj}. Accordingly, the optical modulator 12d generates an optical modulation signal of the optical polarized wave k having the light wavelength λ_{Tj}.

The base station device 20d includes an optical demultiplexer 21, a plurality of polarized wave separators 27, a plurality of O/Es 22, a beamforming circuit 23, and a plurality of antennas 24-1 to 24-N. Although the description is omitted in Fig. 9 for simplification of explanation, as many polarized wave separators 27 as the number n of light wavelengths λ_{T} need to be provided, and as many O/Es 22 as the number (e.g., 2) of optical polarized waves to be used by the light wavelengths λ_{Tj} need to be provided.

A plurality of O/E 22 are connected to the input ports of the beamforming circuit 23. N antennas 24 are connected to the output ports of the beamforming circuit 23. Electrical signals output from the plurality of O/Es 22 are input in phase to N input ports of the beamforming circuit 23.

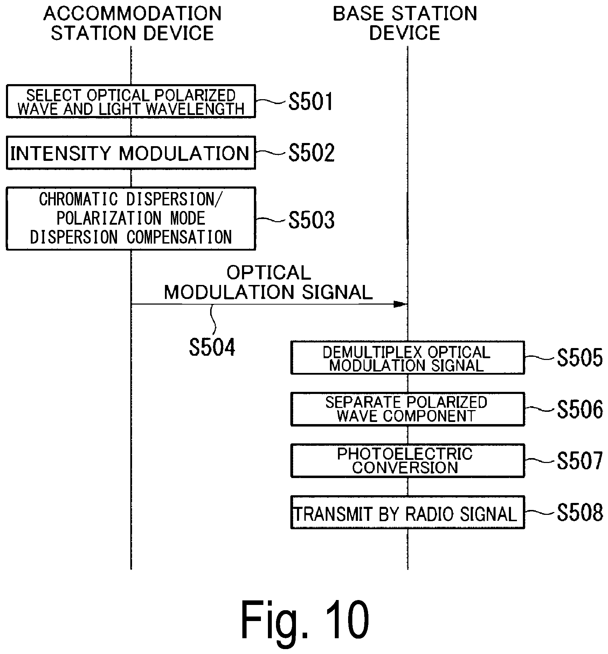

Fig. 10 is a sequence diagram showing a flow of processing of the wireless communication system 1d in the fifth embodiment.

The controller 11d selects an optical polarized wave and a light wavelength depending on a direction in which a beam is desired to be formed in the base station device 20d (step S501). For example, the controller 11d selects one light wavelength λ_{Tj} from among light wavelengths λ_{T1}, ..., λ_{Tn}. Further, the controller 11d selects one optical polarized wave X from among optical polarized waves k. The controller 11d controls the optical modulator 12d such that the optical modulator 12d performs optical intensity modulation on an optical signal of the optical polarized wave X having the selected light wavelength k_{Tj}.

The optical modulator 12d performs intensity modulation on a transmission signal using the optical signal of the optical polarized wave X having the light wavelength λ_{Tj} designated by the controller 11d (step S502). Accordingly, the optical modulator 12d generates an optical modulated signal of the optical polarized wave X having the light wavelength λ_{Tj}. The optical modulator 12d outputs the generated optical modulation signal to the chromatic dispersion/polarization mode dispersion compensator 15.

The chromatic dispersion/polarization mode dispersion compensator 15 performs chromatic dispersion and polarization mode dispersion compensation on the optical modulation signal (step S503). The chromatic dispersion/polarization mode dispersion compensator 15 transmits the optical modulation signal after dispersion compensation processing to the optical transmission line 30 (step S504).

The optical modulation signal sent to the optical transmission line 30 is input to the base station device 20d. The optical demultiplexer 21 of the base station device 20d demultiplexes the input optical modulation signal depending on the wavelength (step S505). The polarized wave separators 27 are connected to the output ports of the optical demultiplexer 21 in accordance with the number of wavelengths. Therefore, the optical modulation signal demultiplexed by the optical demultiplexer 21 is output to a polarized wave separator 27 connected to an output port corresponding to the wavelength. In Fig. 10, it is assumed that the optical modulation signal having the light wavelength λ_{Tj} is demultiplexed by the optical demultiplexer 21 and is input to the polarized wave separator 27 connected to the output port corresponding to the light wavelength λ_{Tj}.

The polarized wave separator 27 separates the component of the optical polarized wave k of the optical modulation signal of the optical polarized wave X (step S506). The O/Es 22 are connected to the output ports of the polarized wave separator 27 in accordance with the number of optical polarized waves. Therefore, the optical modulation signal separated by the polarized wave separator 27 is output to an O/E 22 connected to an output port corresponding to the optical polarized wave component. In Fig. 10, it is assumed that the optical modulation signal of the optical polarized wave X is separated by the polarized wave separator 27 and is input to the O/E 22 connected to the output port of the optical polarized wave X.

The O/E 22 converts the input optical modulation signal into an electrical signal (step S507). By this processing, the optical modulation signal is converted into an electrical signal. The O/E 22 outputs the converted electrical signal to the beamforming circuit 23. The beamforming circuit 23 forms a beam in a direction corresponding to an input port to which the electron signal is input. In-phase RF signals are input to the input ports of the beamforming circuit 23 since chromatic dispersion compensation and polarization mode dispersion have been performed. Accordingly, a radio signal is emitted from an antenna 24 connected to an output port corresponding to the input port to which the electrical signal is input. The antenna 24 connected to the output port corresponding to the input port to which the electrical signal is input radiates a radio signal corresponding to the input electrical signal (step S508).

According to the wireless communication system 1d configured as described above, the direction of the transmission beam can be switched remotely by switching the combination of the light wavelength and the optical polarized wave of the transmission signal in the accommodation station device 10d. Furthermore, chromatic dispersion compensation is performed in the accommodation station device 10d, and a signal is transmitted to the base station device 20d. Accordingly, it is possible to curb the influence of chromatic dispersion occurring in the optical transmission line 30. Since the influence of chromatic dispersion can be curbed, signals transmitted from the accommodation station device 10d at the same timing can be input in phase to the beamforming circuit 23 included in the base station device 20d. As a result, the width of a beam transmitted from the base station device 20d can be controlled. Therefore, it is possible to control a beam and a beam width of a transmission/reception antenna without requiring control of the base station device and distance information of an optical fiber.

### (Modified Example of Fifth Embodiment)

The accommodation station device 10d may be configured to perform multi-beam formation in the base station device 20d by performing wavelength division multiplexing and polarization division multiplexing by simultaneously using a plurality of optical polarized waves and a plurality of light wavelengths.

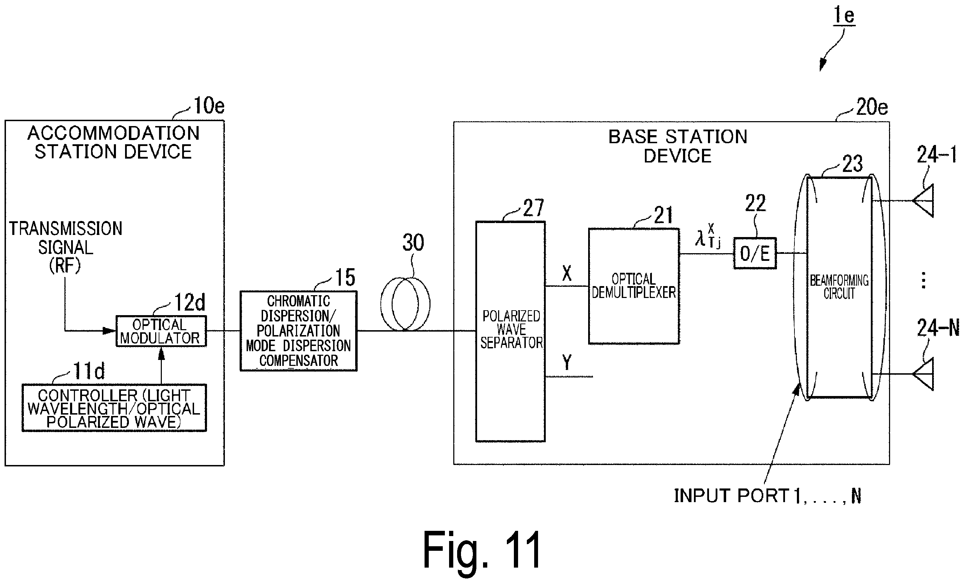

The accommodation station device 10d and the base station device 20d shown in Fig. 9 may be configured as shown in Fig. 11. Fig. 11 is a diagram showing an example of a configuration of a wireless communication system 1e in a modified example of the fifth embodiment. The wireless communication system 1e includes an accommodation station device 10e and a base station device 20e. The accommodation station device 10e and the base station device 20e are connected via the optical transmission line 30.

The accommodation station device 10e does not include the chromatic dispersion/polarization mode dispersion compensator 15 as compared with the accommodation station device 10d. The chromatic dispersion/polarization mode dispersion compensator 15 is provided on the optical transmission line 30 between the accommodation station device 10e and the base station device 20e.

The base station device 20e includes a polarized wave separator 27, an optical demultiplexer 21, a plurality of O/Es 22, a beamforming circuit 23, and a plurality of antennas 24-1 to 24-N. Although the description is omitted in Fig. 11 for simplification of explanation, as many optical demultiplexer 21 as the number (e.g., 2) of optical polarized waves need to be provided, and as many O/Es 22 as the total number (m_{X}+m_{Y}) of the number m_{X} of frequencies to be used by an optical polarized wave X and the number m_{Y} of frequencies to be used by an optical polarized wave Y need to be provided.

The plurality of O/E 22 are connected to the input ports of the beamforming circuit 23. N antennas 24 are connected to the output ports of the beamforming circuit 23. Electrical signals output from the plurality of O/Es 22 are input in phase to N input ports of the beamforming circuit 23.

The base station device 20e shown in Fig. 9 demultiplexes the optical modulation signal received via the optical transmission line 30 and then demultiplexes the component of the optical polarized wave k, whereas the base station device 20e demultiplexes the component of the optical polarized wave k of the optical modulation signal received via the optical transmission line 30 and then demultiplexes the optical modulation signal.

The accommodation station device 10e may be configured to perform multi-beam formation in the base station device 20e by performing wavelength division multiplexing and polarization division multiplexing by simultaneously using a plurality of optical polarized waves and a plurality of light wavelengths.

### (Sixth Embodiment)

In the first to fifth embodiments, the configuration of signal transmission in the downlink direction has been described. A configuration of signal transmission in the uplink direction will be described in the sixth embodiment. In the sixth embodiment, a configuration in which a base station device performs wavelength multiplexing on a signal and transmits the signal to an accommodation station device will be described.

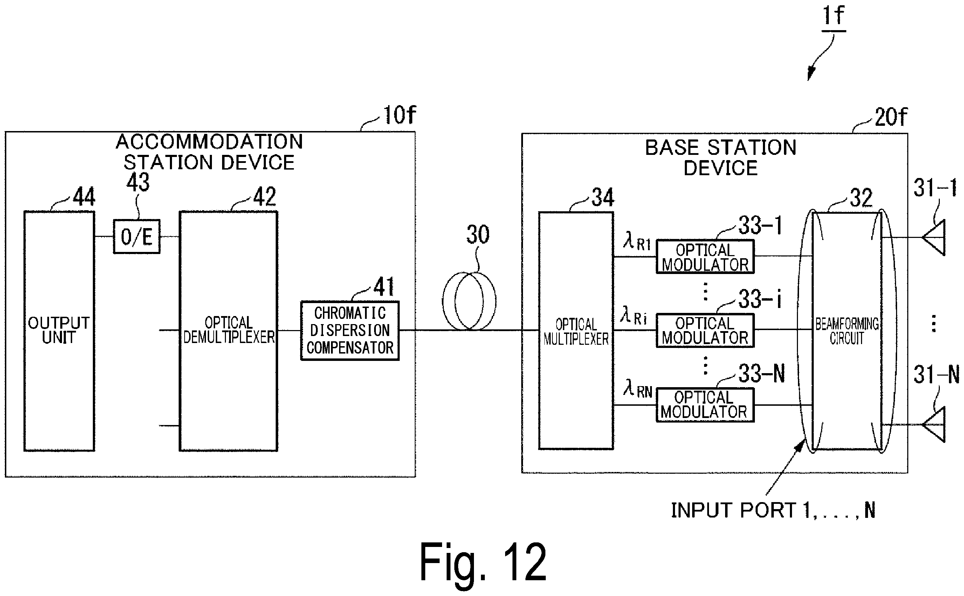

Fig. 12 is a diagram showing an example of a configuration of a wireless communication system 1f in the sixth embodiment. The wireless communication system 1f includes an accommodation station device 10f and a base station device 20f. The accommodation station device 10f and the base station device 20f are connected via the optical transmission line 30.

The base station device 20f includes a plurality of antennas 31-1 to 31-N, a beamforming circuit 32, a plurality of optical modulators 33-1 to 33-N, and an optical multiplexer 34.

The antennas 31-1 to 31-N receive a radio signal transmitted from an external device. The external device is, for example, a wireless device that is a target with which the base station device 20f communicates. The antennas 31-1 to 31-N convert the received radio signal into electrical signals and output the converted electrical signals to the beamforming circuit 32.

The beamforming circuit 32 has N input ports and N output ports, similarly to the beamforming circuit 23 in the first embodiment. The optical modulators 33-1 to 33-N are connected to the input ports of the beamforming circuit 32. The antennas 31-1 to 31-N are connected to the output ports of the beamforming circuit 32. N frequencies fri, ..., f_{TN} one-to-one correspond to the N input ports of the beamforming circuit 23 and N reception beams.

The beamforming circuit 32 receives the electrical signals output from the antennas 31-1 to 31-N through the output ports and outputs them to the optical modulators 33-1 to 33-N connected to the input ports.

The optical modulators 33-1 to 33-N perform intensity modulation on optical signals having certain wavelengths using the electrical signals output from the beamforming circuit 32. Accordingly, the optical modulators 33 generate optical modulation signals.

The optical multiplexer 34 multiplexes the optical modulation signals output from the optical modulators 33-1 to 33-N and performs wavelength division multiplexing thereon. Accordingly, the optical multiplexer 34 generates a wavelength multiplex signal.

The accommodation station device 10f includes a chromatic dispersion compensator 41, an optical demultiplexer 42, a plurality of O/Es 43, and an output unit 44.

The chromatic dispersion compensator 41 performs chromatic dispersion compensation on the wavelength multiplex signal received through the optical transmission line 30.

The optical demultiplexer 42 demultiplexes the wavelength multiplex signal subjected to chromatic dispersion compensation by the chromatic dispersion compensator 41 depending on wavelengths. The optical demultiplexer 42 is an AWG, for example. Optical signals demultiplexed by the optical demultiplexer 42 for respective wavelengths are input to the O/Es 43.

The O/Es 43 are photoelectric converters that convert the optical signals demultiplexed by the optical demultiplexer 42 for the respective wavelength into electrical signals.

The output unit 44 demodulates input electrical signals corresponding to wavelengths λ_{R1}, ..., λ_{Rm}. For example, the output unit 44 may select one of the input electrical signals corresponding to the wavelengths λ_{R1}, ..., λ_{Rm}, and demodulate it. This is the same as selecting one beam from among N reception beams. The output unit 44 can also form multiple beams by selecting a plurality of wavelengths and using them simultaneously. The output unit 44 may perform Multiple Input Multiple Output (MIMO) signal processing after demodulating a plurality of input electrical signals having the frequencies f_{R1}, ..., f_{Rm}.

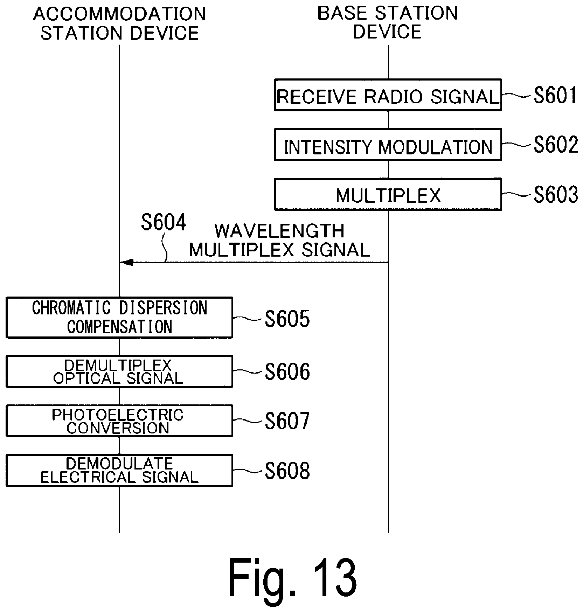

Fig. 13 is a sequence diagram showing a flow of processing of the wireless communication system 1f in the sixth embodiment.

An antenna 31 receive a radio signal transmitted from an external device (step S601). The antenna 31 converts the received radio signal into an electrical signal and outputs the electrical signal to the beamforming circuit 32. The beamforming circuit 32 outputs the electrical signal to an optical modulator 33 connected to an input port corresponding to an output port to which the electrical signal is input. In Fig. 13, it is assumed that the electrical signal is output from the input port i of the beamforming circuit 32, for example.

The optical modulator 33-i connected to the input port i of the beamforming circuit 32 performs intensity modulation on an optical signal having a certain wavelength using the electrical signal output from the beamforming circuit 32 (step S602). Accordingly, the optical modulator 33-i generates an optical modulation signal. The optical modulator 33-i outputs the generated optical modulation signal to the optical multiplexer 34. The optical multiplexer 34 multiplexes the optical modulation signals output from the respective optical modulators 33 and performs wavelength division multiplexing thereon (step S603). Accordingly, the optical multiplexer 34 generates a wavelength multiplex signal. The optical multiplexer 34 transmits the generated wavelength multiplex signal to the accommodation station device 10f via the optical transmission line 30 (step S604).

The wavelength multiplex signal sent to the optical transmission line 30 is input to the accommodation station device 10f. The chromatic dispersion compensator 41 of the accommodation station device 10f performs chromatic dispersion compensation on the input wavelength multiplex signal (step S605). The chromatic dispersion compensator 41 outputs the chromatic dispersion -compensated wavelength multiplex signal to the optical demultiplexer 42. The optical demultiplexer 42 demultiplexes the input wavelength multiplex signal depending on the wavelengths (step S606). Accordingly, the wavelength multiplex signal is output to corresponding O/Es 43. As many O/Es 43 as the number of wavelengths are connected to the optical demultiplexer 42. The O/Es 43 convert the optical modulation signals demultiplexed by the optical demultiplexer 42 into electrical signals (step S607). The O/Es 43 output the electrical signals to the output unit 44. The output unit 44 demodulates the input electrical signals (step S608).

According to the wireless communication system 1f configured as described above, the same effects as those of the first embodiment can also be obtained in the uplink direction.

### (Seventh Embodiment)

The seventh embodiment differs from the sixth embodiment in that a base station device performs subcarrier multiplexing on a signal and transmits the signal to an accommodation station device. Description of the seventh embodiment will be focused on differences from the sixth embodiment.

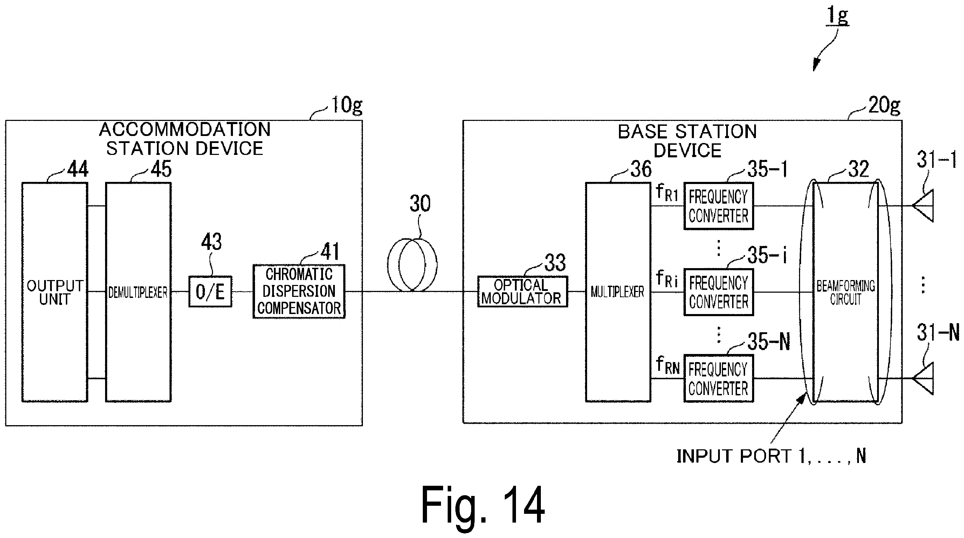

Fig. 14 is a diagram showing an example of a configuration of a wireless communication system 1g in the seventh embodiment. The wireless communication system 1g includes an accommodation station device 10g and a base station device 20g. The accommodation station device 10g and the base station device 20g are connected via the optical transmission line 30.

The base station device 20g includes a plurality of antennas 31-1 to 31-N, a beamforming circuit 32, a plurality of frequency converters 35-1 to 35-N, a multiplexer 36, and an optical modulator 33.

The frequency converters 35-1 to 35-N convert the frequencies of input electrical signals. Accordingly, the electrical signals input to the frequency converters 35-1 to 35-N are converted into frequencies f_{Ri}.

The multiplexer 36 multiplexes the electrical signals output from the frequency converters 35-1 to 35-N.

The optical modulator 33 performs intensity modulation on an optical signal having a certain wavelength using the electrical signal multiplexed by the multiplexer 36 and performs subcarrier multiplexing thereon. Accordingly, the optical modulator 33 generates a multiplex signal.

The accommodation station device 10g includes a chromatic dispersion compensator 41, an O/E 43, a demultiplexer 45, and an output unit 44.

The demultiplexer 45 demultiplexes the electrical signal output from the O/E 43 depending on frequencies. For example, the demultiplexer 45 demultiplexes electrical signals having frequencies f_{R1}, ..., f_{Rm}.

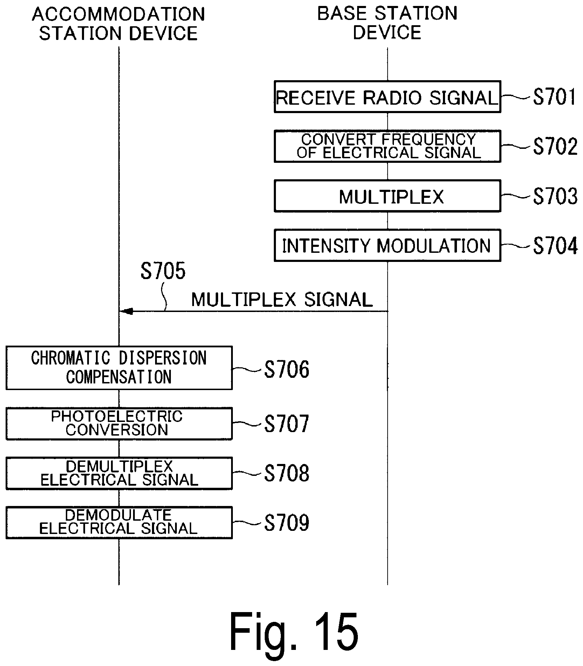

Fig. 15 is a sequence diagram showing a flow of processing of the wireless communication system 1g in the seventh embodiment.

Each antenna 31 receive a radio signal transmitted from an external device (step S701). The antenna 31 converts the received radio signal into an electrical signal and outputs the electrical signal to the beamforming circuit 32. The beamforming circuit 32 outputs the electrical signal to a frequency converter 35 connected to an input port corresponding to an output port to which the electrical signal is input. In Fig. 15, it is assumed that the electrical signal is output from the input port i of the beamforming circuit 32, for example.

The frequency converter 35 connected to the input port i of the beamforming circuit 32 converts the frequency of the electrical signal output from the beamforming circuit 32 (step S702). Accordingly, the frequency of the electrical signal is converted into a frequency f_{Ri}. The frequency converter 35 outputs the electrical signal having the frequency f_{Ri} to the multiplexer 36. The multiplexer 36 multiplexes electrical signals output from the respective frequency converters 35 (step S703). The electrical signal multiplexed by the multiplexer 36 is output to the optical modulator 33.

The optical modulator 33 performs intensity modulation on an optical signal having a certain wavelength using the electrical signal multiplexed by the multiplexer 36 and performs subcarrier multiplexing thereon (step S704). Accordingly, the optical modulator 33 generates a multiplex signal. The optical modulator 33 transmits the generated multiplex signal to the accommodation station device 10g via the optical transmission line 30 (step S705).

The multiplex signal sent to the optical transmission line 30 is input to the accommodation station device 10g. The chromatic dispersion compensator 41 of the accommodation station device 10g performs chromatic dispersion compensation on the input wavelength multiplex signal (step S706). The chromatic dispersion compensator 41 outputs the chromatic dispersion -compensated wavelength multiplex signal to the O/E 43. The O/E 43 converts the input multiplex signal into an electrical signal (step S707). By this processing, the multiplex signal is converted into an electrical signal having a frequency f_{Ri}. The O/E 43 outputs the electrical signal having the frequency f_{Ri} to the demultiplexer 45. The electrical signal having the frequency f_{Ri} output to the demultiplexer 45 is demultiplexed depending on frequencies (step S708). The electrical signals having frequencies f_{Ri} demultiplexed by the demultiplexer 45 are input to the output unit 44. The output unit 44 demodulates the input electrical signals having the frequencies f_{Ri} (step S709).

According to the wireless communication system 1g configured as described above, the same effects as those of the second embodiment can also be obtained in the uplink direction.

### (Eighth Embodiment)

The eighth embodiment differs from the sixth embodiment in that a base station device performs subcarrier multiplexing and wavelength division multiplexing on a signal and transmits the signal to the accommodation station device. Description of the eighth embodiment will be focused on differences from the sixth embodiment.

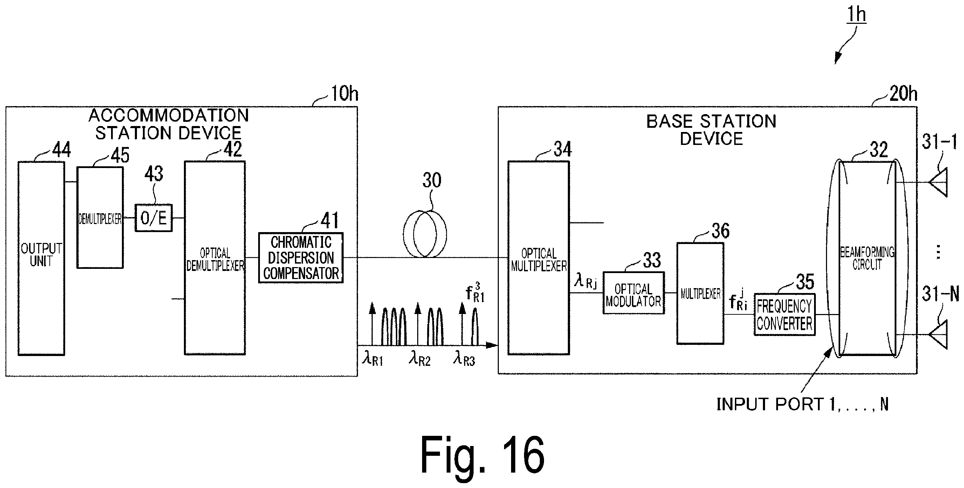

Fig. 16 is a diagram showing an example of a configuration of a wireless communication system 1h in the eighth embodiment. The wireless communication system 1h includes an accommodation station device 10h and a base station device 20h. The accommodation station device 10h and the base station device 20h are connected via the optical transmission line 30.

The base station device 20h includes a plurality of antennas 31-1 to 31-N, a beamforming circuit 32, a plurality of frequency converters 35, a plurality of multiplexers 36, a plurality of optical modulators 33, and an optical multiplexer 34. Although the description is omitted in Fig. 16 for simplification of explanation, as many multiplexers 36 and optical modulators 33 as the number n of light wavelengths λ_{R} need to be provided, and as many frequency converters 35 as the number mⱼ of frequencies used by light wavelengths λ_{Rj} need to be provided.

The optical multiplexer 34 multiplexes signals subjected to subcarrier multiplexing by the respective optical modulators 33 and performs wavelength division multiplexing thereon. Accordingly, the optical multiplexer 34 generates a wavelength multiplex signal.

The accommodation station device 10h includes a chromatic dispersion compensator 41, an optical demultiplexer 42, a plurality of O/Es 43, a plurality of demultiplexers 45, and an output unit 44. Although the description is omitted in Fig. 16 for simplification of explanation, as many O/Es 43 and demultiplexers 45 as the number n of light wavelengths λ_{R} need to be provided.

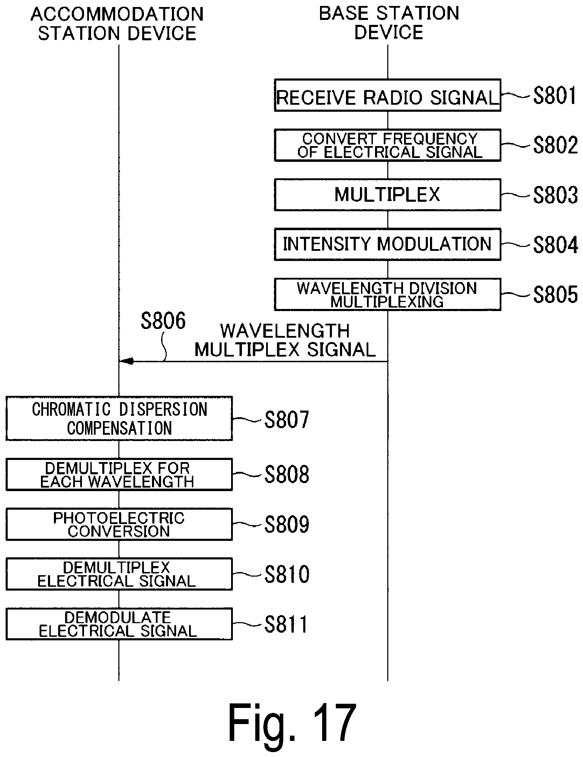

Fig. 17 is a sequence diagram showing a flow of processing of the wireless communication system 1h in the eighth embodiment.

Each antenna 31 receive a radio signal transmitted from an external device (step S801). The antenna 31 converts the received radio signal into an electrical signal and outputs the electrical signal to the beamforming circuit 32. The beamforming circuit 32 outputs the electrical signal to a frequency converter 35 connected to an input port corresponding to an output port to which the electrical signal is input.

The frequency converters 35 convert electrical signals output from the input ports into frequencies f^{j}_{Ri} corresponding to light wavelengths λ_{Rj} (step S802). The frequency converters 35 output the electrical signals having the frequencies f^{j}_{Ri} to the multiplexer 36. The multiplexer 36 multiplexes the electrical signals output from the frequency converters 35 (step S803). The electrical signal multiplexed by the multiplexer 36 is output to the optical modulator 33.

The optical modulators 33 perform intensity modulation on an optical signal having a certain wavelength using the electrical signal multiplexed by the multiplexer 36 and perform subcarrier multiplexing thereon (step S804). Accordingly, the optical modulators 33 generate multiplex signals. The optical modulators 33 output the generated multiplex signals to the optical multiplexer 34. The optical multiplexer 34 multiplexes the multiplex signals generated by the optical modulators 33 and performs wavelength division multiplexing thereon (step S805). Accordingly, the optical multiplexer 34 generates a wavelength multiplex signal. The optical multiplexer 34 transmits the generated wavelength multiplex signal to the accommodation station device 10h via the optical transmission line 30 (step S806).

The wavelength multiplex signal sent to the optical transmission line 30 is input to the accommodation station device 10h. The chromatic dispersion compensator 41 of the accommodation station device 10h performs chromatic dispersion compensation on the input wavelength multiplex signal (step S807). The chromatic dispersion compensator 41 outputs the chromatic dispersion -compensated wavelength multiplex signal to the optical demultiplexer 42. The optical demultiplexer 42 demultiplexes the input wavelength multiplex signal depending on wavelengths (step S808). Accordingly, the wavelength multiplex signal becomes an optical modulation signal having a light wavelength λ_{Rj} and is output to a corresponding O/E 43. As many O/Es 43 as the number of wavelengths are connected to the optical demultiplexer 42. The O/E 43 converts the optical modulation signal having the light wavelength λ_{Rj} demultiplexed by the optical demultiplexer 42 into an electrical signal (step S809). By this processing, the optical modulation signal having the light wavelength λ_{Rj} is converted into an electrical signal having a frequency f^{j}_{Ri}. The O/E 43 outputs the electrical signal having the frequency f^{j}_{Ri} to the demultiplexer 45.

The electrical signal having the frequency f^{j}_{Ri} output to the demultiplexer 45 is demultiplexed depending on the frequency (step S810). The electrical signal having the frequency f^{j}_{Ri} demultiplexed by the demultiplexer 45 is input to the output unit 44. The output unit 44 demodulates the input electrical signal having the frequency f^{j}_{Ri} (step S811). For example, the output unit 44 may select one of Σⁿⱼ₌₁mⱼ combinations of the light wavelengths λ_{Rj} and the frequencies f^{j}_{Ri} and demodulates the same. This is the same as selecting one beam from among Σⁿⱼ₌₁mⱼ reception beams. The output unit 44 can also form multiple beams by selecting a plurality of frequencies and a plurality of light wavelengths and using them simultaneously. The output unit 44 may perform MIMO signal processing after demodulating a plurality of input electrical signals having frequencies f^{j}_{R1}, ..., f^{j}_{Rm}.

According to the wireless communication system 1h configured as described above, the same effects as those of the third embodiment can also be obtained in the uplink direction.

### (Ninth Embodiment)

The ninth embodiment differs from the sixth embodiment in that a base station device performs subcarrier multiplexing and polarization division multiplexing on a signal and transmits the signal to an accommodation station device. Description of the ninth embodiment will be focused on differences from the sixth embodiment.

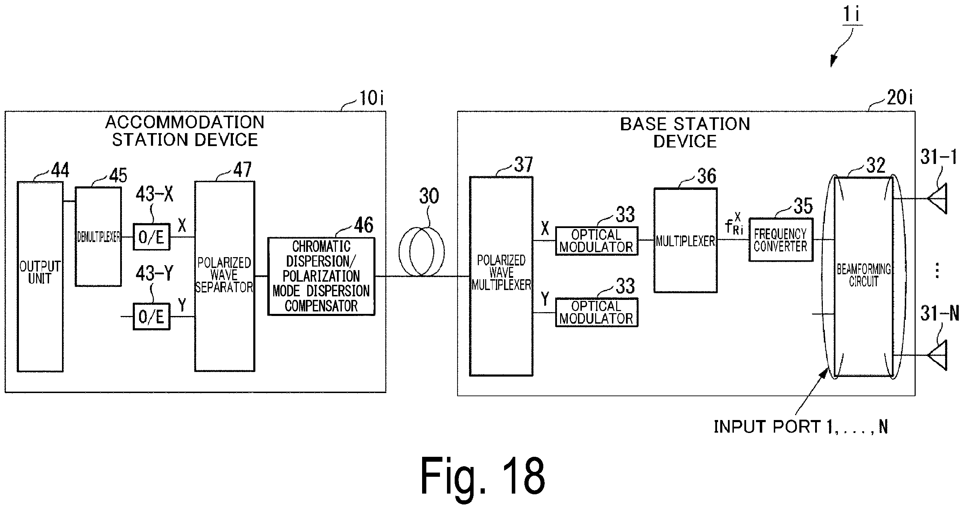

Fig. 18 is a diagram showing an example of a configuration of a wireless communication system 1i in the ninth embodiment. The wireless communication system 1i includes an accommodation station device 10i and a base station device 20i. The accommodation station device 10i and the base station device 20i are connected via the optical transmission line 30.

The base station device 20i includes a plurality of antennas 31-1 to 31-N, a beamforming circuit 32, a plurality of frequency converters 35, a plurality of multiplexers 36, a plurality of optical modulators 33, and a polarized wave multiplexer 37. Although the description is omitted in Fig. 18 for simplification of explanation, as many optical modulators 33 and multiplexers 36 as the number (e.g., 2) of optical polarized waves need to be provided, and as many frequency converters 35 as the total number (m_{X}+m_{Y}) of the number mx of frequencies to be used by an optical polarized wave X and the number m_{Y} of frequencies to be used by an optical polarized wave Y need to be provided.

The polarized wave multiplexer 37 multiplexes signals subjected to subcarrier multiplexing by the plurality of optical modulators 33 and performs polarization division multiplexing thereon. Accordingly, the polarized wave multiplexer 37 generates a polarized wave multiplex signal.

The accommodation station device 10i includes a chromatic dispersion/polarization mode dispersion compensator 46, a polarized wave separator 47, a plurality of O/Es 43-X and 43-Y, a plurality of demultiplexers 45, and an output unit 44. Although the description is omitted in Fig. 18 for simplification of explanation, as many O/Es 43 and demultiplexers 45 as the number (e.g., 2) of optical polarized waves need to be provided.

The chromatic dispersion/polarization mode dispersion compensator 46 compensates for chromatic dispersion and polarization mode dispersion for an optical modulation signal of an optical polarized wave k.

The polarized wave separator 47 separates the component of the optical polarized wave k of the polarized wave multiplex signal on which chromatic dispersion and polarization mode dispersion have been compensated by the chromatic dispersion/polarization mode dispersion compensator 46.

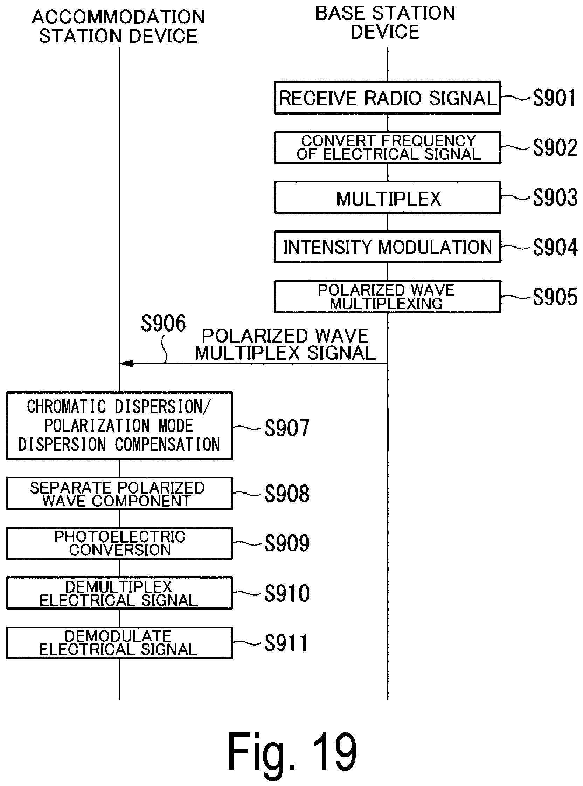

Fig. 19 is a sequence diagram showing a flow of processing of the wireless communication system 1i in the ninth embodiment.

Each antenna 31 receive a radio signal transmitted from an external device (step S901). The antenna 31 converts the received radio signal into an electrical signal and outputs the electrical signal to the beamforming circuit 32. The beamforming circuit 32 outputs the electrical signal to a frequency converter 35 connected to an input port corresponding to an output port to which the electrical signal is input.

Each frequency converter 35 converts the electrical signal output from the input port into a frequency f^{k}_{Ri} corresponding to the optical polarized wave k (step S902). Each frequency converter 35 outputs the electrical signal having f^{k}_{Ri} to the multiplexer 36. The multiplexer 36 multiplexes electrical signals output from the respective frequency converters 35 (step S903). The electrical signal multiplexed by the multiplexer 36 is output to the optical modulator 33.

The optical modulators 33 perform intensity modulation on the optical signal of the optical polarized wave k using the electrical signal multiplexed by the multiplexer 36 and perform subcarrier multiplexing thereon (step S904). Accordingly, the optical modulators 33 generate multiplex signals. The optical modulators 33 output the generated multiplex signals to the polarized wave multiplexer 37. The polarized wave multiplexer 37 multiplexes the multiplex signals generated by the optical modulators 33 and performs polarization division multiplexing thereon (step S905). Accordingly, the polarized wave multiplexer 37 generates a polarized wave multiplex signal. The polarized wave multiplexer 37 transmits the generated polarized wave multiplexed signal to the accommodation station device 10i via the optical transmission line 30 (step S906).

The polarized wave multiplex signal sent to the optical transmission line 30 is input to the accommodation station device 10i. The chromatic dispersion/polarization mode dispersion compensator 46 performs chromatic dispersion and polarization mode dispersion compensation on the input polarized wave multiplex signal (step S907). The chromatic dispersion/polarization mode dispersion compensator 46 outputs the polarized multiplex signal after dispersion compensation processing to the polarized wave separator 47. The polarized wave separator 47 separates the optical polarized wave k of the input polarized wave multiplex signal (step S908). Accordingly, the polarized wave multiplex signal becomes the optical modulation signal of the optical polarized wave k and is output to a corresponding O/E 43. The O/E 43 converts the optical modulation signal of the optical polarized wave k separated by the polarized wave separator 47 into an electrical signal (step S909). By this processing, the optical modulation signal of the optical polarized wave k is converted into an electrical signal having a frequency f^{k}_{Ri}. The O/E 43 outputs the electrical signal having the frequency f^{k}_{Ri} to the demultiplexer 45.

The electrical signal having the frequency f^{k}_{Ri} output to the demultiplexer 45 is demultiplexed depending on the frequency (step S910). The electrical signal having the frequency f^{k}_{Ri} demultiplexed by the demultiplexer 45 is input to the output unit 44. The output unit 44 demodulates the input electrical signal having the frequency f^{k}_{Ri} (step S911). For example, the output unit 44 may select one of (m_{X}+m_{Y}) combinations of the optical polarized wave k and the frequency f^{k}_{Ri} and demodulate the same. This is the same as selecting one of (m_{X}+m_{Y}) reception beams. The output unit 44 can also form multiple beams by selecting a plurality of frequencies and a plurality of optical polarized waves and using them simultaneously. The output unit 44 may perform MIMO signal processing after demodulating a plurality of input electrical signals having frequencies f^{k}_{R1}, ..., f^{k}_{Rm}.

According to the wireless communication system 1i configured as described above, the same effects as those of the fourth embodiment can also be obtained in the uplink direction.

### (Tenth Embodiment)

The tenth embodiment differs from the fifth embodiment in that a base station device performs wavelength division multiplexing and polarization division multiplexing on a signal and transmits the signal to an accommodation station device. Description of the tenth embodiment will be focused on differences from the fifth embodiment.

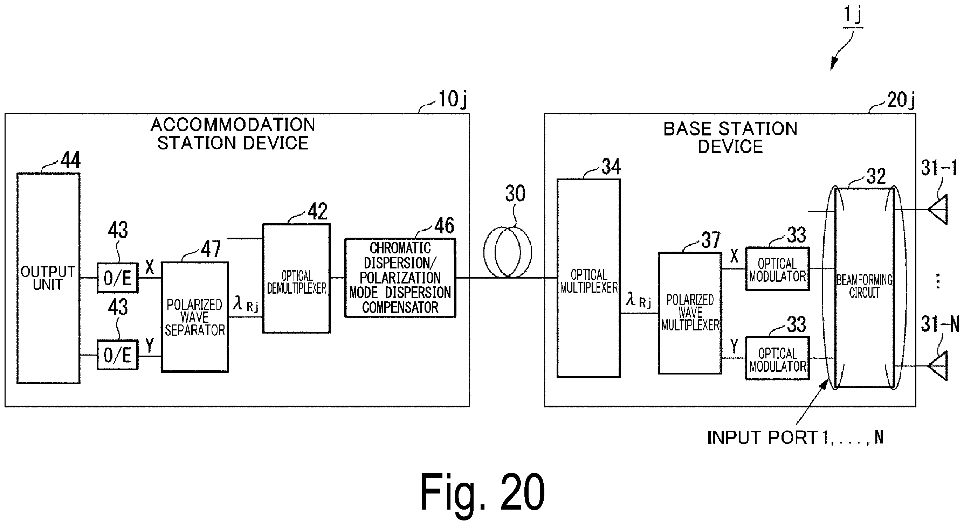

Fig. 20 is a diagram showing an example of a configuration of a wireless communication system 1j in the tenth embodiment. The wireless communication system 1j includes an accommodation station device 10j and a base station device 20j. The accommodation station device 10j and the base station device 20j are connected via the optical transmission line 30.

The base station device 20j includes a plurality of antennas 31-1 to 31-N, a beamforming circuit 32, a plurality of optical modulators 33, a plurality of polarized wave multiplexers 37, and an optical multiplexer 34. Although the description is omitted in Fig. 20 for simplification of explanation, as many polarized wave multiplexers 37 as the number n of light wavelengths λ_{R} need to be provided, and as many optical modulators 33 as the number (e.g., 2) of the polarized waves to be used by a light wavelength λ_{Rj} need to be provided.

Each polarized wave multiplexer 37 multiplexes signals subjected to subcarrier multiplexing by the plurality of optical modulators 33 and performs polarization division multiplexing thereon. Accordingly, each polarized wave multiplexer 37 generates a polarized wave multiplex signal.

The optical multiplexer 34 multiplexes the signals subjected to polarization division multiplexing by each polarized wave multiplexer 37 and performs wavelength division multiplexing thereon. Accordingly, the optical multiplexer 34 generates a wavelength multiplex signal.

The accommodation station device 10j includes a chromatic dispersion/polarization mode dispersion compensator 46, an optical demultiplexer 42, a plurality of polarized wave separators 47, a plurality of O/Es 43, and an output unit 44. Although the description is omitted in Fig. 16 for simplification of explanation, as many polarized wave separators 47 as the number n of light wavelengths λ_{R} need to be provided, and as many O/Es 43 as the number (e.g., 2) of optical polarized waves to be used by a light wavelength λ_{Rj} need to be provided.

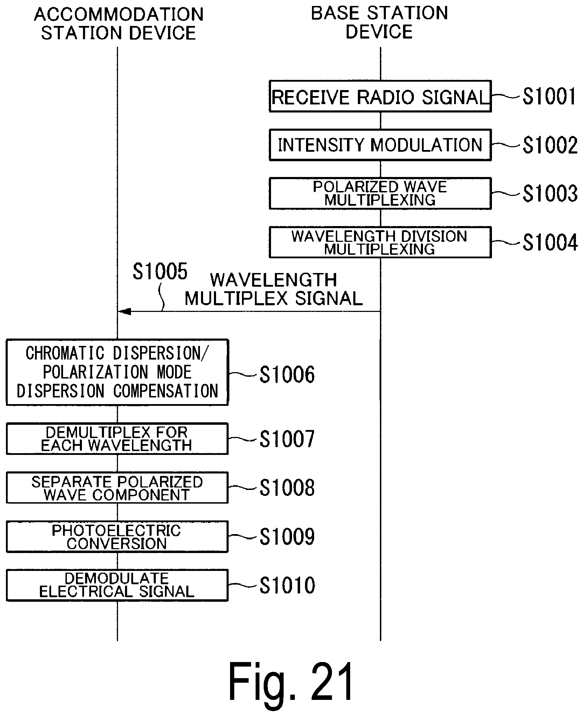

Fig. 21 is a sequence diagram showing a flow of processing of the wireless communication system 1j in the tenth embodiment.

Each antenna 31 receive a radio signal transmitted from an external device (step S1001). The antenna 31 converts the received radio signal into an electrical signal and outputs the electrical signal to the beamforming circuit 32. The beamforming circuit 32 outputs the electrical signal to an optical modulator 33 connected to an input port corresponding to an output port to which the electrical signal is input.

Each optical modulator 33 performs intensity modulation on an optical signal of an optical polarized wave k having a light wavelength λ_{Rj} using the electrical signal output from the input port (step S1002). Each optical modulator 33 outputs the optical modulation signal of the optical polarized wave k to each polarized wave multiplexer 37.

Each polarized wave multiplexer 37 multiplexes optical modulation signals generated by the respective optical modulators 33 and performs polarization division multiplexing thereon (step S 1003). Accordingly, each polarized wave multiplexer 37 generates a polarized wave multiplex signal. Each polarized wave multiplexer 37 outputs the generated polarized wave multiplex signal to the optical multiplexer 34. The optical multiplexer 34 multiplexes polarized wave multiplex signals output from the respective polarized wave multiplexers 37 and performs wavelength division multiplexing thereon (step S 1004). Accordingly, the optical multiplexer 34 generates a wavelength multiplex signal. The optical multiplexer 34 transmits the generated wavelength multiplex signal to the accommodation station device 10g via the optical transmission line 30 (step S1005).

The wavelength multiplex signal sent to the optical transmission line 30 is input to the accommodation station device 10h. The chromatic dispersion/polarization mode dispersion compensator 46 of the accommodation station device 10h performs chromatic dispersion and polarization mode dispersion compensation on the input wavelength multiplex signal (step S1006). The chromatic dispersion/polarization mode dispersion compensator 46 outputs the wavelength multiplex signal after dispersion compensation processing to the optical demultiplexer 42. The optical demultiplexer 42 demultiplexes the input wavelength multiplex signal depending on wavelengths (step S1007). Accordingly, the wavelength multiplex signal becomes an optical modulation signal having a light wavelength λ_{Rj} and is output to the corresponding polarized wave separator 47. The polarized wave separator 47 separates the optical polarized wave k of the input optical modulation signal having the light wavelength λ_{Rj} (step S 1008). Accordingly, the optical modulation signal having the light wavelength λ_{Rj} becomes the optical modulation signal of the optical polarized wave k and is output to the corresponding O/E 43. The O/E 43 converts the optical modulation signal of the optical polarized wave k separated by the polarized wave separator 47 into an electrical signal (step S 1009). By this processing, the optical modulation signal of the optical polarized wave k is converted into an electrical signal. The O/E 43 outputs the electrical signal to the output unit 44.

The output unit 44 demodulates the input electrical signal (step S1010). For example, the output unit 44 may select one of 2n combinations of the light wavelength λ_{Rj} and the optical polarized wave k and demodulate the same. This is the same as selecting one beam from among 2n reception beams. The output unit 44 can also form multiple beams by selecting a plurality of light wavelengths and a plurality of optical polarized waves and utilizing them simultaneously. The output unit 44 may perform MIMO signal processing after demodulating a plurality of input electrical signals.

According to the wireless communication system 1j configured as described above, the same effects as those of the fifth embodiment can also be obtained in the uplink direction.

### (Modified Example of Tenth Embodiment)

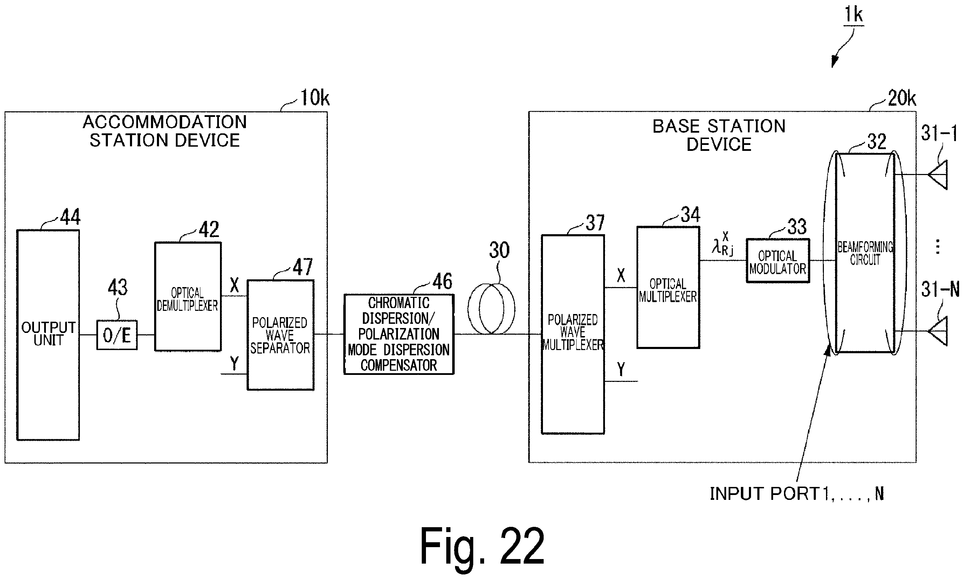

The accommodation station device 10j and the base station device 20j shown in Fig. 20 may be configured as shown in Fig. 22. Fig. 20 is a diagram showing an example of a configuration of a wireless communication system 1k in the modified example of the tenth embodiment. The wireless communication system 1k includes an accommodation station device 10k and a base station device 20k. The accommodation station device 10k and the base station device 20k are connected via the optical transmission line 30.

The base station device 20k includes a plurality of antennas 31-1 to 31-N, a beamforming circuit 32, a plurality of optical modulators 33, a plurality of optical multiplexers 34, and a polarized wave multiplexer 37. Although the description is omitted in Fig. 22 for simplification of explanation, as many optical multiplexers 34 as the number (e.g., 2) of polarized waves need to be provided, and as many optical modulators 33 as the total number (m_{X}+m_{Y}) of the number m_{X} of frequencies to be used by an optical polarized wave X and the number m_{Y} of frequencies to be used by an optical polarized wave Y need to be provided.

The accommodation station device 10k includes a polarized wave separator 47, a plurality of optical demultiplexers 42, a plurality of O/Es 43, and an output unit 44. Although the description is omitted in Fig. 22 for simplification of explanation, as many optical demultiplexers 42 as the number n of light wavelengths λ_{R} need to be provided, and as many O/Es 43 as the number (e.g., 2) of optical polarized waves to be used by a light wavelength λ_{Rj} need to be provided. In this manner, the accommodation station device 10k does not include the chromatic dispersion/polarization mode dispersion compensator 46 as compared with the accommodation station device 10j. The chromatic dispersion/polarization mode dispersion compensator 46 is provided on the optical transmission line 30 between the accommodation station device 10k and the base station device 20k.

The base station device 20j shown in Fig. 22 performs wavelength division multiplexing after polarization division multiplexing, whereas the base station device 20k performs polarized wave division multiplexing after wavelength division multiplexing. In the accommodation station device 10k, after the component of an optical polarized wave k of a polarized wave multiplex signal received via the optical transmission line 30 is separated by the polarized wave separator 47, the component of the optical polarized wave k is demultiplexed by the optical demultiplexer 42 depending on wavelengths.

### (Modified Examples in First to Tenth Embodiments)

The configurations in the first embodiment to the fifth embodiment and the configurations in the sixth embodiment to the tenth embodiment may be combined. For example, the first embodiment and the sixth embodiment may be combined. In this case, the accommodation station device 10 and the accommodation station device 10f may be combined as an accommodation station device, and the base station device 20 and the base station device 20f may be combined as a base station device. For example, the second embodiment and the seventh embodiment may be combined. For example, the third embodiment and the eighth embodiment may be combined. For example, the fourth embodiment and the ninth embodiment may be combined. For example, the fifth embodiment and the tenth embodiment may be combined.

The first to tenth embodiments show configurations in which only wavelengths are controlled, only frequencies are controlled, frequencies and light wavelengths are controlled, frequencies and optical polarized waves are controlled, and optical polarized waves and light wavelengths are controlled. In the first to tenth embodiments, a configuration in which all of optical polarized waves, light wavelengths, and frequencies are controlled may be adopted. In the case of such a configuration, for example, in the case of downlink transmission, the configuration (wavelength control) shown in the first embodiment and the configuration (frequency and optical polarized wave control) shown in the fourth embodiment may be combined, and all of light wavelengths, optical polarized waves, and frequencies may be controlled. In the case of uplink transmission, for example, the configuration shown in the sixth embodiment (wavelength control) and the configuration shown in the ninth embodiment (frequency and optical polarized wave control) may be combined, and all of optical polarized waves, light wavelengths, and frequencies may be controlled.

Some functional units of the accommodation station devices 10, 10a, 10b, 10c, 10d, 10e, 10f, 10g, 10h, 10i, 10j, and 10 k and the base station devices 20, 20a, 20b, 20c, 20d, 20e, 20f, 20g, 20h, 20i, 10 j, and 10k in the above-described embodiments may be realized by a computer. In such a case, a program for realizing such functions may be recorded on a computer-readable recording medium, and the program recorded on the recording medium may be read and executed by the computer system. A "computer system" recited herein includes an OS and hardware such as peripheral devices.

In addition, a "computer-readable recording medium" refers to a portable medium such as a flexible disc, a magneto-optical disk, a ROM, or a CD-ROM, or a storage device such as a hard disk built in a computer system. Furthermore, the "computer-readable recording medium" may include a medium that dynamically holds a program for a short time, such as a communication line in a case where the program is transmitted via a network such as the Internet or a communication line such as a telephone line, and a medium that holds the program for a certain time, such as a volatile memory inside a computer system serving as a server or a client in that case. Also, the above program may be for realizing a part of the functions described above, may be for realizing the functions described above in combination with a program already recorded in a computer system, or may be for realizing the functions described above using a programmable logic device such as an FPGA.

Although the embodiment of the present invention has been described in detail with reference to the drawings, a specific configuration is not limited to this embodiment, and design within the scope of the gist of the present invention, and the like are included.

### [Industrial Applicability]

The present invention is applicable to a wireless communication system that performs analog RoF transmission.

### [Reference Signs List]

10, 10a, 10b, 10c, 10d, 10e, 10f, 10g, 10h, 10i, 10j, 10k Accommodation station device
11, 11a, 11b, 11c, 11d Controller
12, 12a, 12b, 12c, 12d Optical modulator
13 chromatic dispersion compensator
14 Frequency converter
15 chromatic dispersion/polarization mode dispersion compensator
20, 20a, 20b, 20c, 20d, 20e, 20f, 20g, 20h, 20i, 20j, 20k Base station device
21 Optical demultiplexer
22 O/E
23 Beamforming circuit
24-1 to 24-N, 31-1 to 31-N Antenna
25 Demultiplexer
26-1 to 26-N Frequency converter
27 Polarized wave separator
32 Beamforming circuit
33 Optical modulator
34 Optical multiplexer
35 Frequency converter
36 Multiplexer
37 Polarized wave multiplexer
41 chromatic dispersion compensator
42 Optical demultiplexer
43 O/E
44 Output unit
45 Multiplexer
46 chromatic dispersion/polarization mode dispersion compensator
47 Polarized wave separator

## Claims

1. A wireless communication method in a wireless communication system including an accommodation station device and a base station device that performs beam formation according to control of the accommodation station device, the wireless communication method comprising:
transmitting an optical modulation signal generated by performing intensity modulation on an optical signal on the basis of a transmission signal to be transmitted to the base station device via an optical transmission line by the accommodation station device controlling any combination of a light wavelength, a frequency, or an optical polarized wave, or a plurality of frequencies or a plurality of light wavelengths, to perform beamforming control of the base station device;
transmitting the optical modulation signal after dispersion compensation is performed in an electrical domain or an optical domain in the accommodation station device or performing dispersion compensation on the optical modulation signal on the optical transmission line; and
inputting, by the base station device, an electrical signal based on the dispersion-compensated optical modulation signal to a beamforming circuit having a plurality of input ports to perform beam formation in a direction corresponding to an input port to which the electrical signal is input.

2. The wireless communication method according to claim 1, wherein the accommodation station device controls the light wavelength to transmit the optical modulation signal generated by performing intensity modulation on an optical signal having the controlled light wavelength on the basis of the transmission signal to the base station device to control beamforming control of the base station device, and the base station device demultiplexes the chromatic dispersion -compensated optical modulation signal depending on wavelengths, converts demultiplexed signals into electrical signals, and then inputs the electrical signals to the beamforming circuit in phase to perform beam formation.

3. The wireless communication method according to claim 1, wherein the accommodation station device controls the frequency to convert a frequency of the transmission signal and transmits the optical modulation signal generated by performing intensity modulation on an optical signal on the basis of the transmission signal having the converted frequency to the base station device to perform beamforming control of the base station device, and the base station device converts the chromatic dispersion -compensated optical modulation signal into an electrical signal and then demultiplexes the electrical signal depending on frequencies to input electrical signals to the beamforming circuit in phase to perform beam formation.

4. The wireless communication method according to claim 1, wherein the accommodation station device controls a combination of the light wavelength and the frequency to convert the frequency of the transmission signal and transmits the optical modulation signal generated by performing intensity modulation on an optical signal having the controlled light wavelength to the base station device on the basis of the transmission signal having the converted frequency to perform beamforming control of the base station device, and the base station device demultiplexes the chromatic dispersion -compensated optical modulation signal depending on wavelengths, converts the optical modulation signal demultiplexed for each wavelength into an electrical signal, and demultiplexes the electrical signal depending on frequencies to input the electrical signals to the beamforming circuit to perform beam formation.

5. The wireless communication method according to claim 1, wherein the accommodation station device controls a combination of the optical polarized wave and the frequency to convert the frequency of the transmission signal and transmits the optical modulation signal generated by performing intensity modulation on an optical signal having the controlled optical polarized wave to the base station device on the basis of the transmission signal having the converted frequency to perform beamforming control of the base station device, and the base station device separates an optical polarized component of the optical modulation signal that has been subjected to chromatic dispersion compensation and polarization mode dispersion, converts the optical modulation signal separated for each optical polarized wave component into an electrical signal, and demultiplexes the electrical signal depending on frequencies to input electrical signals to the beamforming circuit to perform beam formation.

6. The wireless communication method according to claim 1, wherein the accommodation station device controls a combination of the optical polarized wave and the light wavelength to transmit the optical modulation signal generated by performing intensity modulation on an optical signal of the optical polarized wave having the controlled light wavelength to the base station device using the transmission signal to perform beamforming control of the base station device, and the base station device separates an optical polarized wave component of the optical modulation signal demultiplexed for each wavelength after demultiplexing the optical modulation signal that has been subjected to chromatic dispersion compensation and polarization mode dispersion depending on wavelengths, or demultiplexes the optical modulation signal separated for each optical polarized wave component depending on wavelength after separating the optical polarized wave component of the optical modulation signal, converts the optical modulation signal into an electrical signal, and then inputs the electrical signal to the beamforming circuit to perform beam formation.

7. The wireless communication method according to claim 1, wherein the accommodation station device controls a combination of the optical polarized wave, the frequency, and the light wavelength to convert the frequency of the transmission signal and transmits the optical modulation signal generated by performing intensity modulation on an optical signal of the optical polarized wave having the controlled light wavelength to the base station device on the basis of the transmission signal having the converted frequency to perform beamforming control of the base station device, and the base station device inputs the electrical signal obtained on the basis of the optical modulation signal that has been subjected to chromatic dispersion compensation and polarization mode dispersion to the beamforming circuit to perform beam formation.

8. The wireless communication method according to any one of claims 1 to 7, wherein the base station device converts a radio signal transmitted from an external device into an electrical signal, inputs the electrical signal to an output port of the beamforming circuit, outputs the electrical signal from the input port of the beamforming circuit corresponding to the output port, and transmits an optical signal obtained by intensity modulation using the electrical signal to the accommodation station device,
dispersion compensation is performed in an electrical domain or an optical domain in the accommodation station device, or the dispersion compensation is performed on the optical modulation signal on the optical transmission line, and
the accommodation station device demodulates the optical signal transmitted from the base station device.
